# EUROPEAN PATENT APPLICATION

(11) **EP 4 737 053 A1**
(43) Date of publication of application: **06.05.2026**
(21) Application number: 24895485.1
(22) Date of filing: 27.05.2024
(51) Int. Cl.: B23K 31/02, B23K 37/00, H01M 50/169

(54) **END CAP WELDING DEVICE, BATTERY ASSEMBLING SYSTEM, ASSEMBLY METHOD, AND BATTERY CELL**

(30) Priority: 30.11.2023 CN 202311643446
(71) Applicant: Contemporary Amperex Technology Co., Limited, Ningde, Fujian 352100 (CN)
(72) Inventor: WU, Kai, Ningde, Fujian 352100 (CN); LIAN, Shiyuan, Ningde, Fujian 352100 (CN); PAN, Wensheng, Ningde, Fujian 352100 (CN); CHEN, Jianyun, Ningde, Fujian 352100 (CN); FAN, Xiang, Ningde, Fujian 352100 (CN)
(74) Representative: Kraus & Lederer PartGmbB
(86) International application number: PCT/CN2024/095556
(87) International publication number: WO 2025/112375

(57) **Abstract**

The present application provides an end cover welding apparatus (30) for a battery cell (100), an assembling method and a battery cell (100), in which, the battery cell (100) includes a case (101), and an end cover (102) which is arranged at one end of the case (101); a joint of the case (101) and the end cover (102) is provided with a first connecting seam and a second connecting seam which are arranged along a circumferential direction of the case (101); the end cover welding apparatus (30) includes a material conveying assembly (310) and a welding assembly (340), in which, the material conveying assembly (310) includes a conveying line (311), a first clamp (312) and a second clamp (313), and the first clamp (312) and the second clamp (313) are arranged at an interval on the same conveying line (311); the first clamp (312) is configured to fix the case (101) and make the first connecting seam visible; the second clamp (313) is configured to fix the case (101) and make the second connecting seam visible; and the welding assembly (340) is arranged along the conveying line (311) and is configured to weld the first connecting seam when the first clamp (312) with the battery cell (100) fixed is conveyed to the welding assembly (340), and is also configured to weld the second connecting seam when the second clamp (313) with the battery cell (100) fixed is conveyed to the welding assembly (340).

## Description

The present application claims priority to Chinese Patent Application 2023116434461, filed on November 30, 2023 and entitled "END COVER WELDING APPARATUS, BATTERY ASSEMBLING SYSTEM, ASSEMBLING METHOD AND BATTERY CELL", which is incorporated herein by reference in its entirety.

### TECHNICAL FIELD

The present application relates to the field of battery processing, and particularly relates to an end cover welding apparatus, a battery assembling system, an assembling method and a battery cell.

### BACKGROUND

With the development of battery technology, battery cells are used in more and more fields, and have gradually replaced traditional fossil energy in the field of automotive power. Battery cells can store chemical energy and convert it into electrical energy in a controlled manner. In recyclable battery cells, active substances can be activated by charging for reuse after discharge.

In the process of mass production of battery cells, it is often necessary to use a cover welding apparatus for battery cells. However, existing cover welding apparatus have the problem of high cost.

In addition, the above is used only for providing background technical information related to the present application, and do not necessarily constitute related technology.

### SUMMARY

In view of the above problems, the present application provides an end cover welding apparatus for a battery cell, an assembling method and a battery cell, aiming to decrease the manufacturing cost of the end cover welding apparatus for the battery cell.

One embodiment of the present application provides an end cover welding apparatus for a battery cell; the battery cell includes a case and an end cover which is arranged at one end of the case; a joint of the case and the end cover is provided with a first connecting seam and a second connecting seam which are arranged along a circumferential direction of the case; the end cover welding apparatus includes a material conveying assembly and a welding assembly, in which, the material conveying assembly includes a conveying line, a first clamp and a second clamp, and the first clamp and the second clamp are arranged at an interval on the same conveying line; the first clamp is configured to fix the case and expose the first connecting seam; the second clamp is configured to fix the case and expose the second connecting seam; and the welding assembly is arranged along the conveying line and is configured to weld the first connecting seam when the first clamp with the battery cell fixed is conveyed to the welding assembly, and is also configured to weld the second connecting seam when the second clamp with the battery cell fixed is conveyed to the welding assembly.

By means of above way, when the battery cell is placed on the first clamp, the first connecting seam can be welded by the welding assembly; and when the battery cell is placed on the second clamp, the second connecting seam can be welded by the welding assembly. Therefore, the welding assembly can be configured to weld the first connecting seam and can also be configured to weld the second connecting seam, thereby decreasing the manufacturing cost of the end cover welding apparatus.

In some embodiments, the end cover welding apparatus includes a steering assembly which is spaced from the welding assembly along the conveying line; the conveying line is configured to convey the first clamp and the second clamp to the steering assembly from the welding assembly, and then convey to the welding assembly; the steering assembly is configured to take out the battery cell with the first connecting seam welded from the corresponding first clamp and steer the battery cell, and then place the battery cell on the second clamp; or, the steering assembly is configured to take out the battery cell with the second connecting seam welded from the corresponding second clamp and steer the battery cell, and then place the battery cell on the first clamp.

By means of above way, the steering assembly can transfer the battery cell from the first clamp to the second clamp or transfer the battery cell from the second clamp to the first clamp; when the battery cell is placed on the first clamp, the first connecting seam can be welded; and when the battery cell is placed on the second clamp, the second connecting seam can be welded. In addition, the first connecting seam and the second connecting seam can be welded by the same welding assembly, thus decreasing the cost of a welding apparatus.

In some embodiments, the steering assembly includes a supporting frame, a clamping jaw mechanism and a steering motor; the supporting frame is arranged on the outer side of the conveying line, and the clamping jaw mechanism is positioned above the conveying line and is rotatably supported on the supporting frame; the steering motor is in transmission connection with the clamping jaw mechanism and is configured to drive the clamping jaw mechanism to rotate relative to the supporting frame so as to steer; and the clamping jaw mechanism is configured to clamp the battery cell and steer the battery cell.

By means of above way, the steering motor can drive the clamping jaw mechanism that clamps the battery cell to rotate, so as to steer the battery cell.

In some embodiments, the steering assembly includes a lifting frame and a lifting motor; the lifting frame is supported on the supporting frame in a lifting mode, and the clamping jaw mechanism is rotatably arranged on the lifting frame; and the lifting motor is arranged on the supporting frame or the lifting frame, is in transmission connection with the lifting frame and is configured to drive the lifting frame to lift up and down relative to the supporting frame.

By means of above way, the steering assembly can take out the battery cell from the first clamp or the second clamp and then steer the battery cell, which reduces the possibility that the battery cell interferes with other apparatuses in the steering process.

In some embodiments, the conveying line includes a first conveying branch line, a second conveying branch line, a first transferring mechanism and a second transferring mechanism; the first conveying branch line and the second conveying branch line are arranged side by side, and are opposite in conveying directions; the first transferring mechanism is arranged at one end of the first conveying branch line and one end of the second conveying branch line and is configured to transfer the first clamp and the second clamp from the first conveying branch line to the second conveying branch line; the second transferring mechanism is arranged at the other end of the first conveying branch line and the other end of the second conveying branch line and is configured to transfer the first clamp and the second clamp from the second conveying branch line to the first conveying branch line; and the welding assembly is arranged along the first conveying branch line, and the steering assembly is arranged along the second conveying branch line.

By means of above way, the first clamp and the second clamp can circularly move along with the conveying line, so that the end cover welding apparatus can circularly and uninterruptedly assemble and weld the battery cell. In addition, the welding assembly and the steering assembly are arranged in different areas, which facilitates a user to observe and maintain the welding apparatus.

In some embodiments, the welding assembly includes a first welding mechanism and a second welding mechanism which are arranged at an interval along the conveying line; and the first welding mechanism is configured to pre-weld the first connecting seam or the second connecting seam, and the second welding mechanism is configured to further weld the first connecting seam or the second connecting seam after pre-welding.

By means of above way, the welding quality can be improved.

In some embodiments, the first welding mechanism includes two pre-welding mechanisms which are oppositely arranged on two sides of the conveying line; the second welding mechanism includes two full-welding mechanisms which are oppositely arranged on the two sides of the conveying line; the two pre-welding mechanisms are configured to pre-weld parts of the first connecting seams or the second connecting seams in related directions; and the two full-welding mechanisms are configured to carry out full welding on parts of the first connecting seams or the second connecting seams in related directions.

By means of above way, the two first connecting seams/the two second connecting seams can be welded at the same time, thereby improving the welding efficiency.

In some embodiments, the second welding mechanism is configured to carry out first welding on the first connecting seam or the second connecting seam after pre-welding in a first direction, and carry out second welding on the first connecting seam or the second connecting seam after the first welding in a second direction, and the first direction is opposite to the second direction.

By means of above way, the welding quality can be improved, and the problem of insufficient molten pool of a welding wire is relieved.

In some embodiments, the welding assembly includes at least one full-welding mechanism which is configured to carry out full welding on the first connecting seam or the second connecting seam.

By means of above way, the use of the pre-welding mechanisms can be reduced, and thus the manufacturing cost can be decreased.

In some embodiments, the end cover welding apparatus includes a rolling assembly which is spaced from the welding assembly, and the rolling assembly is configured to roll the battery cell welded by the welding assembly so as to roll welding flux on the first connecting seam or the second connecting seam.

By means of above way, welding seams of the first connecting seam and the second connecting seam can be shaped, thus improving the surface quality of the welding seams.

In some embodiments, the rolling assembly includes two rolling mechanisms which are oppositely arranged on the two sides of the conveying line; and the two rolling mechanisms are configured to abut against the battery cell from the two sides of the conveying line so as to roll the first connecting seam or the second connecting seam, and a flange, exceeding the case, of an end cover.

By means of above way, the welding seams of the first connecting seam and the second connecting seam and the end cover can be shaped, thus the surface quality of the battery cell is improved.

In some embodiments, each rolling mechanism includes a support and two rollers, in which, the support is arranged on the outer side of the conveying line, and the two rollers are arranged at an interval on the support in an extending direction of the conveying line, so that the battery cell can pass through the two rollers in turn; and the two rollers are rotatably arranged on the support so as to roll the battery cell.

By means of above way, the two rollers can carry out secondary rolling shaping on the welding seams of the first connecting seam and the second connecting seam, which further improves the surface quality of the welding seams.

In some embodiments, the end cover welding apparatus includes a welding slag cleaning assembly which is spaced from the welding assembly along the conveying line, and the welding slag cleaning assembly is configured to clean welding slag on the battery cell welded by the welding assembly, so as to separate the welding slag from the battery cell.

By means of above way, the possibility that foreign matters such as the welding slag are left on the battery cell can be reduced.

In some embodiments, the end cover welding apparatus includes a press-fitting assembly which is spaced from the welding assembly along the conveying line, and the press-fitting assembly is configured to perform press-fitting on the case and the end cover before the battery cell is conveyed to the welding assembly; and the welding assembly is configured to weld the battery cell after press-fitting.

By means of above way, the end cover and the case can be combined by press-fitting by the press-fitting assembly, which reduces the possibility of offset of the end cover and the case during assembling.

In some embodiments, the end cover welding apparatus includes a feeding assembly which is spaced from the conveying line, and the feeding assembly is configured to place the battery cell to be fed and welded on the first clamp or the second clamp.

By means of above way, the end cover welding apparatus can realize automatic feeding.

In some embodiments, the feeding assembly includes a material storage mechanism and a feeding mechanism, and the material storage mechanism is configured to store the battery cell to be fed and welded; and the feeding mechanism is arranged along the conveying line, and is configured to take out the corresponding battery cell from the material storage mechanism and place the battery cell on the first clamp or the second clamp.

By means of above way, the end cover welding apparatus can be configured to assemble the battery cells in batches.

In some embodiments, the material storage mechanism is configured to store the battery cell in a preset placement posture relative to the conveying line; the feeding mechanism is configured to take out the battery cell in the preset placement posture from the material storage mechanism and convey the battery cell to the first clamp in the preset placement posture; and the preset placement posture is consistent with a fixed posture required by the first clamp.

By means of above way, the feeding efficiency of the feeding assembly can be improved.

In some embodiments, the end cover welding apparatus includes a discharging assembly which is spaced from the conveying line; and the discharging assembly is configured to take out the welded battery cell from the conveying line and convey the battery cell outwards.

By means of above way, the end cover welding apparatus can automatically discharge.

In some embodiments, the discharging assembly includes a transferring mechanism and a conveying mechanism; the transferring mechanism is arranged along the conveying line and is configured to transfer the welded battery cell from the conveying line to the conveying mechanism; and the conveying mechanism is configured to convey the corresponding battery cell outwards.

By means of above way, the end cover welding apparatus can discharge by the transferring mechanism and the conveying mechanism which are independent of the conveying line, which reduces the possibility that the conveying line is shut down due to discharging.

In some embodiments, the conveying mechanism includes a first conveying sub-mechanism and a second conveying sub-mechanism; the transferring mechanism is configured to transfer the battery cell which is welded and passes detection from the conveying line to the first conveying sub-mechanism, and to transfer the battery cell which is welded and does not pass detection from the conveying line to the second conveying sub-mechanism; and the first conveying sub-mechanism and the second conveying sub-mechanism are configured to convey relatively borne battery cells outwards respectively.

By means of above way, the qualified battery cells and the unqualified battery cells can be discharged respectively, which is conducive to recovering the unqualified battery cells and post-treating the qualified battery cells.

In some embodiments, the first conveying sub-mechanism includes a first drawstring mechanism and a second drawstring mechanism which can move relative to the transferring mechanism and can move between a carrying position and an output position, and the first drawstring mechanism and the second drawstring mechanism are configured to transfer to the output position or be far away from the output position; the first drawstring mechanism and the second drawstring mechanism are configured to store the battery cells transferred by the transferring mechanism when in the output position; and the first drawstring mechanism and/or the second drawstring mechanism are/is configured to store the battery cell and move to the output position to output corresponding pair of battery cells after a pair of battery cells is successfully paired.

By means of above way, the first drawstring mechanism and the second drawstring mechanism work at the same time, which is conducive to improving the pairing and discharging efficiency.

In some embodiments, the first drawstring mechanism includes a first conveying drawstring and a first temporary storing drawstring; the second drawstring mechanism includes a second conveying drawstring and a second temporary storing drawstring; the first conveying drawstring and the first temporary storing drawstring are arranged side by side, and the second conveying drawstring and the second temporary storing drawstring are arranged side by side; the first conveying drawstring and the second conveying drawstring are arranged side by side at an interval and are located on two sides of the output position; the first conveying drawstring and the first temporary storing drawstring can move towards the output position together or be far away from the output position; the second conveying drawstring and the second temporary storing drawstring can move towards the output position together or be far away from the output position; the first temporary storing drawstring and the second temporary storing drawstring are configured to temporarily store another battery cell to be paired when one battery cell to be paired is transferred to the second drawstring mechanism; the first conveying drawstring and the second conveying drawstring are configured to store the battery cells to be paired; when the battery cell is temporarily stored on the first temporary storing drawstring, the battery cell stored on the first conveying drawstring is paired with the battery cell temporarily stored on the first temporary storing drawstring; when the battery cell is temporarily stored on the second temporary storing drawstring, the battery cell stored on the second conveying drawstring is paired with the battery cell temporarily stored on the second temporary storing drawstring; and when the battery cell is not temporarily stored on the first temporary storing drawstring and the battery cell is not temporarily stored on the second temporary storing drawstring, the battery cell stored on the first conveying drawstring is paired with the battery cell stored on the second conveying drawstring.

By means of above way, the pairing efficiency can be improved in the discharging process, and the risk that discharging is delayed because the qualified battery cell is not stored in any one of the first conveying drawstring and the second conveying drawstring is reduced.

In some embodiments, the end cover welding apparatus includes a post-welding detection assembly; and the post-welding detection assembly is arranged between the welding assembly and the transferring mechanism along the conveying line, and is configured to detect whether the welded battery cell is qualified or not.

By means of above way, the qualified and unqualified battery cells can be efficiently identified by the post-welding detection assembly.

In some embodiments, the first clamp includes a first bearing mechanism and a first holding member; the first bearing mechanism is configured to bear the battery cell, and the first holding member is arranged on the first bearing mechanism and is configured to position the battery cell borne on the first bearing mechanism; the second clamp includes a second bearing mechanism and a second holding member; and the second bearing mechanism is configured to bear the battery cell, and the second holding member is arranged on the second bearing mechanism and is configured to position the battery cell borne on the second bearing mechanism.

By means of above way, the battery cell is positioned, thereby reducing the possibility that the battery cell shakes in the assembling and processing process.

In some embodiments, the first clamp further includes two first side fasteners; the two first side fasteners are oppositely arranged and are configured to pre-limit the battery cell which is borne on the first bearing mechanism and is arranged between the two first side fasteners; the second clamp further includes two second side fasteners; and the two second side fasteners are oppositely arranged and are configured to pre-limit the battery cell which is borne on the second bearing mechanism and is arranged between the two first side fasteners.

By means of above way, the battery cell can be arranged on the first bearing mechanism and the second bearing mechanism in a roughly upright manner by the first side fasteners and the second side fasteners, which reduces the possibility that the battery cell topples over.

In some embodiments, the first clamp further includes a first base; the first bearing mechanism is arranged on the first base in a sliding manner, and a sliding direction of the first bearing mechanism is perpendicular to the conveying direction of the conveying line; the second clamp further includes a second base; and the second bearing mechanism is arranged on the second base in a sliding manner, and the sliding direction of the second bearing mechanism is perpendicular to the conveying direction of the conveying line.

By means of above way, the first bearing mechanism and the second bearing mechanism can move in a direction perpendicular to the conveying direction of the conveying line, and therefore, the battery cell can be moved to a proper to-be-processed area in any step of assembling and processing.

In some embodiments, the case includes two first side walls which are arranged oppositely, and two second side walls which are arranged oppositely; the two first side walls and the two second side walls are arranged in a staggered mode in the circumferential direction of the case; the first connecting seam is located between the two first side walls in the circumferential direction of the case; and the second connecting seam is located between the two second side walls in the circumferential direction of the case.

By means of above way, the end cover welding apparatus can be configured to assemble the quadrangular battery cell.

One embodiment of the present application further provides a battery assembling system; a battery includes a case, an end cover and an electrode assembly; the case is provided with an open end, a terminal post is arranged on the wall, opposite to the open end, of the case, the terminal post is provided with a through hole, and the case and the end cover are connected to form an accommodating cavity communicating with the through hole; an active material coating portion of the electrode assembly is arranged in the case, and a tab portion of the electrode assembly penetrates through the through hole to be connected to the side, deviating from the accommodating cavity, of the terminal post; the battery assembling system includes a conveying device and an assembling device, and the conveying device is configured to convey to-be-assembled structures to each station of the assembling device; the stations of the assembling device at least include a tab welding apparatus, a case entering apparatus, a tab penetrating apparatus, a terminal post welding apparatus and an end cover welding apparatus; the tab welding apparatus is configured to weld a plurality of tab sheets of the electrode assembly to form the tab portion; the case entering apparatus is configured to mount the electrode assembly into the case from the open end; the tab penetrating apparatus is configured to clamp the tab portion to penetrate through the through hole when the electrode assembly is mounted into the case; and the terminal post welding apparatus is configured to weld the tab portion penetrating through the through hole to the side, away from the accommodating cavity, of the terminal post.

One embodiment of the present application further provides an assembling method for a battery cell; the battery cell includes a case, and an end cover which is arranged at one end of the case, and a joint of the case and the end cover is provided with a first connecting seam and a second connecting seam which are arranged along the circumferential direction of the case; the assembling method includes: feeding the battery cell to a first clamp or a second clamp on the same conveying line, the first clamp being configured to fix the case and expose the first connecting seam, and the second clamp being configured to fix the case and expose the second connecting seam; controlling the conveying line to convey the first clamp and the second clamp to a welding assembly; and controlling the welding assembly to weld the first connecting seam of the battery cell fixed on the first clamp, or to weld the second connecting seam of the battery cell fixed on the second clamp.

By means of above way, when the battery cell is placed on the first clamp, the first connecting seam can be welded by the welding assembly; and when the battery cell is placed on the second clamp, the second connecting seam can be welded by the welding assembly. Therefore, the welding assembly can be configured to weld the first connecting seam and can also be configured to weld the second connecting seam, thereby decreasing the manufacturing cost of the end cover welding apparatus.

In some embodiments, after controlling the welding assembly to weld the first connecting seam of the battery cell fixed on the first clamp, or to weld the second connecting seam of the battery cell fixed on the second clamp, the method includes: controlling a conveying line to convey the first clamp and the second clamp to a steering assembly; controlling the steering assembly to take out the battery cell with the first connecting seam welded from the first clamp and steer and place the battery cell on the second clamp, or to take out the battery cell with the second connecting seam welded from the second clamp and steer and place the battery cell on the first clamp; and controlling the conveying line to convey the second clamp and the first clamp to the welding assembly from the steering assembly.

By means of above way, the steering assembly can transfer the battery cell from the first clamp to the second clamp or transfer the battery cell from the second clamp to the first clamp; when the battery cell is placed on the first clamp, the first connecting seam can be welded; and when the battery cell is placed on the second clamp, the second connecting seam can be welded. In addition, the first connecting seam and the second connecting seam can be welded by the same welding assembly, thus decreasing the cost of a welding apparatus.

In some embodiments, before controlling the conveying line to convey the first clamp and the second clamp to a steering assembly, the method includes: controlling a discharging assembly to take out the battery cell with the first connecting seam and the second connecting seam welded from the corresponding first clamp or the corresponding second clamp for discharging; and controlling the conveying line to convey the battery cell only with the first connecting seam welded from the corresponding first clamp to the steering assembly, and/or to convey the battery cell with the second connecting seam welded only from the corresponding second clamp to the steering assembly.

By means of above way, the welded battery cell can be discharged in time.

In some embodiments, the controlling the welding assembly to weld the first connecting seam of the battery cell fixed on the first clamp, or to weld the second connecting seam of the battery cell fixed on the second clamp includes: controlling a first welding mechanism to pre-weld the first connecting seam or the second connecting seam of the battery cell; and controlling a second welding mechanism to perform full-welding on the first connecting seam or the second connecting seam after pre-welding.

By means of above way, the welding quality can be improved.

In some embodiments, the controlling a first welding mechanism to pre-weld the first connecting seam or the second connecting seam of the battery cell includes: controlling two oppositely-arranged pre-welding mechanisms to pre-weld parts of the first connecting seam or second connecting seam in related directions from two sides of the battery cell; and controlling two oppositely-arranged full-welding mechanisms to synchronously perform full-welding on the parts of the first connecting seam or second connecting seam in related directions from two sides of the pre-welded battery cell.

By means of above way, the two first connecting seams/the two second connecting seams can be welded at the same time, thereby improving the welding efficiency.

In some embodiments, after controlling the welding assembly to weld the first connecting seam of the battery cell fixed on the first clamp, or to weld the second connecting seam of the battery cell fixed on the second clamp, the method includes: controlling the conveying line to convey the welded battery cell to a rolling assembly by the corresponding first clamp or second clamp; and rolling the welded battery cell by virtue of the rolling assembly so as to roll a welding flux on the first connecting seam or the second connecting seam.

By means of above way, welding seams of the first connecting seam and the second connecting seam can be shaped, thus improving the surface quality of the welding seams.

In some embodiments, the rolling the welded battery cell by virtue of the rolling assembly so as to roll a welding flux on the first connecting seam or the second connecting seam includes: rolling parts of the first connecting seam and second connecting seam in related directions from two sides of the battery cell by virtue of two oppositely-arranged rolling mechanisms; and rolling a flange, exceeding the case, of the end cover.

By means of above way, the welding seams of the first connecting seam and the second connecting seam and the case can be shaped, thereby improving the surface quality of the battery cell.

In some embodiments, after controlling the welding assembly to weld the first connecting seam of the battery cell fixed on the first clamp, or to weld the second connecting seam of the battery cell fixed on the second clamp, the method includes: controlling the conveying line to convey the welded battery cell to a welding slag cleaning assembly by the corresponding first clamp or second clamp; and controlling the welding slag cleaning assembly to clean welding slag attached to the welded battery cell, so as to separate the welding slag from the battery cell.

By means of above way, the possibility that foreign matters such as the welding slag are left on the battery cell can be reduced.

In some embodiments, the controlling the conveying line to convey the first clamp and the second clamp to a welding assembly includes: controlling a press-fitting assembly to press-fit the battery cell fed to the first clamp or the second clamp so as to press-fit the case and the end cover.

By means of above way, the end cover and the case can be combined by press-fitting by the press-fitting assembly, which reduces the possibility of offset of the end cover and the case during assembling.

In some embodiments, after controlling the welding assembly to weld the first connecting seam of the battery cell fixed on the first clamp, or to weld the second connecting seam of the battery cell fixed on the second clamp, the method includes: controlling a discharging assembly to take out the welded battery cell from the first clamp or the second clamp and discharge the welded battery cell.

By means of above way, automatic discharging can be realized.

In some embodiments, the controlling a discharging assembly to take out the welded battery cell from the first clamp or the second clamp and discharge the welded battery cell includes: controlling a transferring mechanism to transfer the welded battery cell from the conveying line to the conveying mechanism, and controlling the conveying mechanism to convey the corresponding battery cell outwards.

By means of above way, discharging can be carried out by the transferring mechanism and the conveying mechanism which are independent of the conveying line, which reduces the possibility that the conveying line is shut down due to discharging, thereby improving the production efficiency.

In some embodiments, the controlling a transferring mechanism to transfer the welded battery cell from the conveying line to the conveying mechanism, and controlling the conveying mechanism to convey the corresponding battery cell outwards includes: controlling the transferring mechanism to transfer the battery cell which is welded and passes detection from the conveying line to a first conveying sub-mechanism; controlling the transferring mechanism to transfer the battery cell which is welded and does not pass detection from the conveying line to a second conveying sub-mechanism; and controlling the first conveying sub-mechanism to convey the borne battery cells outwards, and controlling the second conveying sub-mechanism to convey the borne battery cells outwards.

By means of above way, the qualified battery cells and the unqualified battery cells can be discharged respectively, which is conducive to recovering the unqualified battery cells and post-treating the qualified battery cells.

In some embodiments, the controlling the first conveying sub-mechanism to convey the borne battery cells outwards includes: after a pair of battery cells is stored in a first drawstring mechanism and/or a second drawstring mechanism and is successfully paired, controlling the first drawstring mechanism and/or the second drawstring mechanism to transfer from a carrying position to a output position, and outwards outputting the corresponding pair of battery cells.

By means of above way, the first drawstring mechanism and the second drawstring mechanism work at the same time, which is conducive to improving the pairing and discharging efficiency.

In some embodiments, the after a pair of battery cells is stored in a first drawstring mechanism and/or a second drawstring mechanism and is successfully paired, controlling the first drawstring mechanism and/or the second drawstring mechanism to transfer from a carrying position to a output position, and outwards outputting the corresponding pair of battery cells includes: when the pair of battery cells to be paired is transferred to the first conveying drawstring and the second conveying drawstring by the transferring mechanism, controlling the second conveying drawstring and the second conveying drawstring to move from the carrying position to the output position at the same time; when one battery cell to be paired is transferred to the second drawstring mechanism by the transferring mechanism, temporarily storing the other battery cell to be paired by a first temporary storing drawstring or a second temporary storing drawstring; when the battery cell is temporarily stored in the first temporary storing drawstring, pairing the battery cell stored on the first conveying drawstring with the battery cell temporarily stored on the first temporary storing drawstring, and controlling the first conveying drawstring and the first temporary storing drawstring to move from the carrying position to the output position; and when the battery cell is temporarily stored on the second temporary storing drawstring, pairing the battery cell stored on the second conveying drawstring with the battery cell temporarily stored on the second temporary storing drawstring, and controlling the second conveying drawstring and the second temporary storing drawstring to move from the carrying position to the output position.

By means of above way, the pairing efficiency can be improved in the discharging process, and the risk that discharging is delayed because the qualified battery cell is not stored in any one of the first conveying drawstring and the second conveying drawstring is reduced.

One embodiment of the present application further provides a battery cell which is obtained by assembling by the above end cover welding apparatus or the above assembling method; the battery cell includes a case, and an end cover which is arranged at one end of the case; a joint of the case and the end cover is provided with a first connecting seam and a second connecting seam which are arranged along the peripheral direction of the case; and the case and the end cover are welded and fixed by the first connecting seam and the second connecting seam.

In some embodiments, the case includes two first side walls which are arranged oppositely, and two second side walls which are arranged oppositely; the two first side walls and the two second side walls are arranged in a staggered mode in the circumferential direction of the case; the first connecting seam is located between the two first side walls in the circumferential direction of the case; and the second connecting seam is located between the two second side walls in the circumferential direction of the case.

### BRIEF DESCRIPTION OF THE DRAWINGS

By reading the detailed description of the preferred implementations below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the accompanying drawings:
FIG. 1 is an exploded schematic structural diagram of a battery cell according to one or more embodiments;
FIG. 2 is a layout schematic diagram of an end cover welding apparatus according to one or more embodiments;
FIG. 3 is a schematic diagram of welding a first connecting seam by a welding assembly according to one or more embodiments;
FIG. 4 is a schematic diagram of welding a second connecting seam by a welding assembly according to one or more embodiments;
FIG. 5 is a schematic structural diagram of a steering assembly according to one or more embodiments;
FIG. 6 is a schematic structural diagram of a first transferring mechanism or a second transferring mechanism according to one or more embodiments;
FIG. 7 is a schematic structural diagram of a second welding mechanism according to one or more embodiments;
FIG. 8 is a schematic structural diagram of a rolling assembly according to one or more embodiments;
FIG. 9 is a schematic structural diagram of a welding slag cleaning assembly according to one or more embodiments;
FIG. 10 is a schematic structural diagram of a press-fitting assembly according to one or more embodiments;
FIG. 11 is a local amplification schematic diagram of a press-fitting assembly in FIG. 9;
FIG. 12 is a schematic structural diagram of a feeding assembly according to one or more embodiments;
FIG. 13 is a schematic structural diagram of a first conveying sub-mechanism according to one or more embodiments;
FIG. 14 is a schematic structural diagram of a first clamp according to one or more embodiments;
FIG. 15 is a schematic structural diagram of a second clamp according to one or more embodiments;
FIG. 16 is a schematic structural diagram of a positioning assembly according to one or more embodiments;
FIG. 17 is a schematic diagram of working principle of a positioning assembly according to one or more embodiments; and
FIG. 18 is a flow schematic diagram of an assembling method for a battery cell according to one or more embodiments.

### Reference numerals:

100, battery cell;
101, case; 1011, first side surface; 1012, second side surface; 102, end cover; 103, electrode assembly; 103a, open end; 1030, tab portion; 104, terminal post; 1040, through hole;
30, end cover welding apparatus;
310, material conveying assembly;
311, conveying line; 3111, first conveying branch line; 3112, second conveying branch line; 3113, first transferring mechanism; 3114, second transferring mechanism; 3115, translation motor; 3116, moving member;
312, first clamp; 3121, first bearing mechanism; 3122, first holding member; 3123, first side fastener; 3124, first base;
313, second clamp; 3131, second bearing mechanism; 3132, second holding member; 3133, second side fastener; 3134, second base;
320, feeding assembly; 321, material storage mechanism; 322, feeding mechanism; 3221, battery cell picking clamping claw; 3222, transverse moving motor;
330, press-fitting assembly; 331, end cover press-fitting mechanism; 3310, end cover press-fitting block; 3311, first driving motor; 332, first side surface press-fitting mechanism; 3320, first side surface press-fitting block; 3321, second driving motor; 333, second side surface press-fitting mechanism; 3330, second side surface press-fitting block; 3331, third driving motor;
340, welding assembly; 341, first welding mechanism; 342, second welding mechanism; 3421, full-welding mechanism; 3422, dust removing mechanism;
350, rolling assembly; 351, rolling mechanism; 3511, support; 3512, roller;
360, welding slag cleaning assembly; 361, steel wire brush; 362, active motor; 363, synchronous belt; 364, transmission shaft;
370, post-welding detection assembly;
380, discharging mechanism; 381, transferring mechanism; 382, conveying mechanism; 383, first conveying sub-mechanism; 384, second conveying sub-mechanism; 3830, first drawstring mechanism; 3831, first conveying drawstring; 3832, first temporary storing drawstring; 3835, second drawstring mechanism; 3836, second conveying drawstring; 3837, second temporary storing drawstring;
390, steering assembly; 391, supporting frame; 392, clamping claw mechanism; 393, steering motor; 394, lifting frame; 395, lifting motor;
400, positioning assembly; 401, end cover positioning mechanism; 4010, end cover positioning block; 4011, fourth driving motor; 402, first side surface positioning mechanism; 4020, first side surface positioning block; 4021, fifth driving motor; 403, second side surface positioning mechanism; 4030, second side surface positioning block; and 4031, sixth driving motor.

### DETAILED DESCRIPTION

Embodiments of the technical solutions of the present application will be described in detail below with reference to the drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiment of the present application, the term "and/or" is merely an association that describes the associated object, indicating that there can be three kinds of relationships, such as A and/or B, which can be denoted as: the existence of A alone, the existence of A and B at the same time, and the existence of B alone. Moreover, the character "/" herein generally indicates that the context objects are in an "or" relationship.

In the description of the embodiment of the present application, the term "a plurality of" refers to more than two (including two), similarly, "a plurality of groups" refers to two or more groups (including two groups), and "a plurality of members" refers to more than two members (including two members).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and the like which indicate the orientation or positional relationship are based on the orientation or positional relationship shown in the accompanying drawing, and are only for the convenience of describing the embodiments of the present application and simplifying the description, and do not indicate or imply that the device or element referred to must have a specific orientation, be constructed and operated in a specific orientation, and therefore cannot be construed as a restriction on the embodiments of the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meanings of the above terms in the embodiments of the present application can be understood according to specific situations.

With the development of battery technology, battery cells are used in more and more fields and gradually replace traditional fossil energy in the field of automotive power. Battery cells can store chemical energy and controllably convert chemical energy into electrical energy. In recyclable battery cells, active substances can be activated by charging for reuse after discharge.

A battery cell generally includes a case, and an end cover which is arranged at one end of the case. When assembling the case and the end cover, a connecting seam is often formed at the joint. In order to improve the firmness and the sealing performance of the battery cell, the connecting seam is generally welded in the production process of the battery cell. However, due to the limitation of the shape of the case of a battery, the connecting seam cannot be welded at a time, a plurality of welding assemblies are often needed to weld different areas of the connecting seam, which increases the manufacturing cost of an end cover welding apparatus for the battery cell.

In order to decrease the manufacturing cost of the end cover welding apparatus, the different areas of the connecting seam can be welded by the same welding assembly. For example, the end cover welding apparatus can include a material conveying assembly and a welding assembly, in which, the material conveying assembly includes a conveying line, a first clamp and a second clamp, and the first clamp and the second clamp are arranged at an interval on the same conveying line; the first clamp is configured to fix the case and expose a first connecting seam; the second clamp is configured to fix the case and expose a second connecting seam; and the welding assembly is arranged along the conveying line and is configured to weld the first connecting seam when the first clamp with the battery cell fixed is conveyed to the welding assembly, and is also configured to weld the second connecting seam when the second clamp with the battery cell fixed is conveyed to the welding assembly.

By means of above way, when the battery cell is placed on the first clamp, the first connecting seam can be welded by the welding assembly; and when the battery cell is placed on the second clamp, the second connecting seam can be welded by the welding assembly. Therefore, the welding assembly can be configured to weld the first connecting seam and can also be configured to weld the second connecting seam, thereby decreasing the manufacturing cost of the end cover welding apparatus.

The battery cell disclosed by the embodiment of the present application can be used in an electrical apparatus using the battery as a power supply or various energy storage systems using the battery as an energy storage element. The electrical apparatus may be, but is not limited to, a mobile phone, a tablet, a laptop, an electric toy, an electric tool, a battery vehicle, an electric vehicle, a ship, a spacecraft, and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like. The end cover welding apparatus disclosed by the embodiment of the present application can be configured to weld the case and the end cover of the battery. A battery assembling system disclosed by the embodiment of the present application can be configured to assemble the battery cell. An assembling method disclosed by the embodiment of the present application can be used for assembling the battery cell.

In the embodiment of the present application, the battery cell can be a secondary battery, and the secondary battery refers to a battery cell which can be continuously used by activating an active material in a charging way after being discharged. Each battery cell can also be a primary battery.

The battery cell includes but is not limited to a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like. The battery cell can be in a cylinder shape, a flat body shape, a cuboid shape or other shapes.

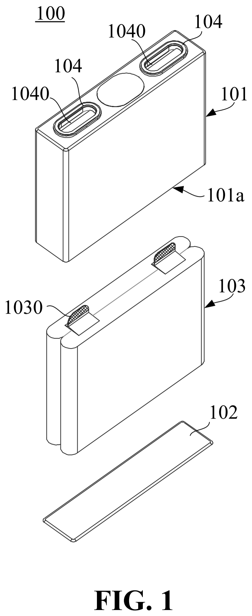

With reference to FIG. 1, according to one or more embodiments of the present application, a battery cell 100 can include a case 101, an end cover 102 and an electrode assembly 103. The case 101 is provided with an open end 101a. A terminal post 104 is arranged on the wall, opposite to the open end 101a, of the case 101. The terminal post 104 is provided with a through hole 1040. The case 101 and the end cover 102 are connected to form an accommodating cavity communicating with the through hole 104. An active material coating portion of the electrode assembly 103 is arranged in the case 101. A tab portion 1030 of the electrode assembly 103 penetrates through the through hole 1040 to be connected to the side, deviating from the accommodating cavity, of the terminal post 104.

The end cover can be arranged at one end of the case 101, and connecting seams arranged in the circumferential direction of the case 101 are arranged at the joint of the case 101 and the end cover 102. As described above, the battery cell 100 can be in a quadrangular prism shape, a cylindrical shape, a hexagonal prism shape or an octagonal prism shape, and therefore the shapes of the connecting seams will be limited by the shape of the battery cell 100 (the case 101 and the end cover 102), for example, the shapes of the connecting seams can be a quadrangle or a circle or a hexagon or an octagon. In order to facilitate description, the following definition is that the connecting seams include a first connecting seam and a second connecting seam which can correspond to different areas of the connecting seams respectively. Definitely, the connecting seams can further include a third connecting seam and a fourth connecting seam.

Taking the battery cell 100 as a cuboid as an example, the case 101 can include two first side surfaces 1011 and two second side surfaces 1012; the two first side surfaces 1011 are oppositely arranged, and the two second side surfaces 1012 are oppositely arranged; and each first side surface 1011 is configured to connect the two second side surfaces 1012, and each second side surface 1012 can connect the two first side surfaces 1011. The first connecting seam is located at the joint of the first side surfaces 1011 and the end cover 102, and the second connecting seam is located at the joint of the second side surfaces 1012 and the end cover 102.

In some other embodiments, the battery cell 100 can be in a hexagonal prism shape, and in this case, a case 101 can include two first side surfaces 1011, two second side surfaces 1012 and two third side surfaces. The two first side surfaces 1011 are oppositely arranged, the two second side surfaces 1012 are oppositely arranged, and the two third side surfaces are oppositely arranged. Each second side surface 1012 can be connected to the first side surfaces 1011 and the third side surfaces. The first connecting seam is located at the joint of the first side surfaces 1011 and the end cover 102, the second connecting seam is located at the joint of the second side surfaces 1012 and the end cover 102, and the third connecting seam is located at the joint of the third side surfaces and the end cover 102.

When the battery cell 100 is in the cylindrical shape, the case 101 can be divided into two first side cases, and two second side cases. The two first side cases are oppositely arranged, and the two second side cases are oppositely arranged. Each first side case can be located between the two second side cases. The first connecting seam is located at the joint of the first side cases and the end cover 102, and the second connecting seam is located at the joint of the second side cases and the end cover 102. Definitely, the case 101 can also be divided into two first side cases, two second side cases and two third side cases. The two first side cases are oppositely arranged, the two second side cases are oppositely arranged, and the two third side cases are oppositely arranged. Each second side case can be connected to the first side cases and the third side cases. The first connecting seam is located at the joint of the first side cases and the end cover 102, the second connecting seam can be located at the joint of the second side cases and the end cover 102, and the third connecting seam is located at the joint of the third side cases and the end cover 102.

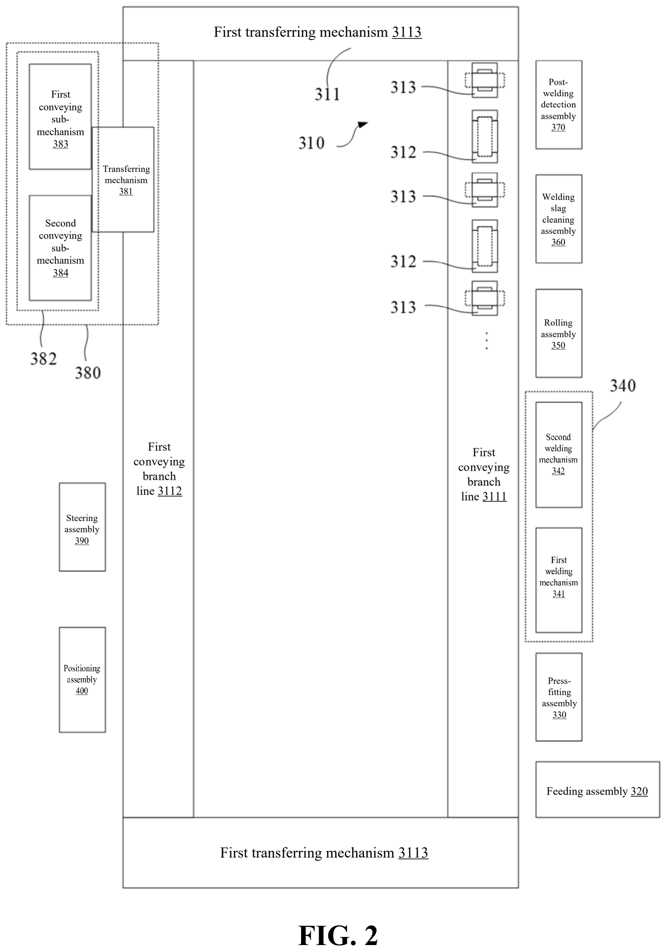

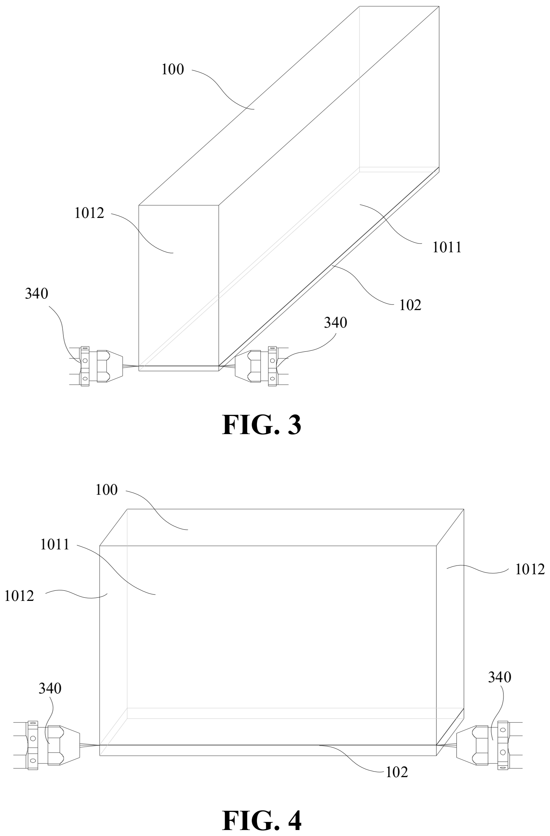

With reference to FIG. 2, FIG. 3 and FIG. 4, according to one or more embodiments of the present application, optionally, an end cover welding apparatus 30 for the battery cell 100 includes a material conveying assembly 310 and a welding assembly 340, in which, the material conveying assembly 310 includes a conveying line 311, a first clamp 312 and a second clamp 313; and the first clamp 312 and the second clamp 313 are arranged at an interval on the same conveying line 311; the first clamp 312 is configured to fix the case 101 and expose the first connecting seam; the second clamp 313 is configured to fix the case 101 and expose the second connecting seam; and the welding assembly 340 is arranged along the conveying line 311 and is configured to weld the first connecting seam when the first clamp 312 fixed with the battery cell 100 is conveyed to the welding assembly 340, and is also configured to weld the second connecting seam when the second clamp 313 fixed with the battery cell 100 is conveyed to the welding assembly 340.

The first connecting seam/the second connecting seam can be exposed in a manner of not being clamped or shielded, so that the first connecting seam/the second connecting seam can be welded. The material conveying assembly 310 is configured to convey the battery cell 100, and the welding assembly 340 is configured to weld the connecting seams (such as the first connecting seam and the second connecting seam) of the battery cell 100. The conveying line 311 can drive the first clamp 312 and the second clamp 313 to transfer, so as to drive the battery cell 100 placed on the first clamp 312 or the second clamp 313 to move. The welding assembly 340 can weld the first connecting seam and the second connecting seam in a laser welding or ultrasonic welding manner.

By means of above way, when the battery cell 100 is placed on the first clamp 312, the first connecting seam can be welded by the welding assembly 340; and when the battery cell 100 is placed on the second clamp 313, the second connecting seam can be welded by the welding assembly 340. Therefore, the welding assembly 340 can be configured to weld the first connecting seam and can also be configured to weld the second connecting seam, thereby decreasing the manufacturing cost of the end cover welding apparatus 30.

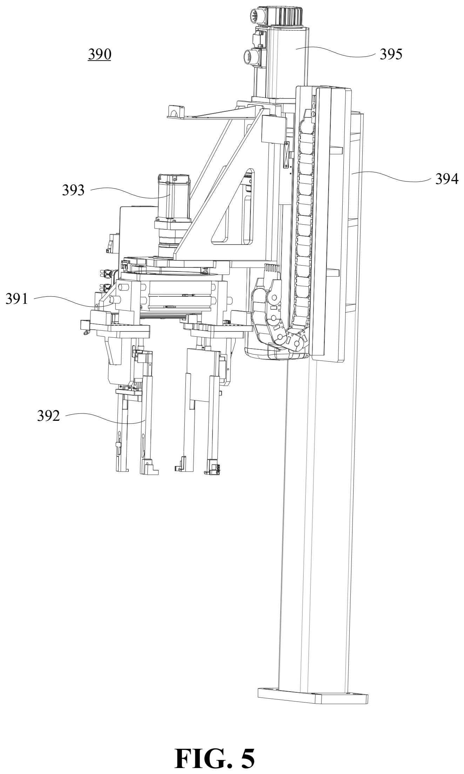

With reference to FIG. 5, according to one or more embodiments of the present application, the end cover welding apparatus 30 includes a steering assembly 390 which is spaced from the welding assembly 340 along the conveying line 311; the conveying line 311 is configured to convey the first clamp 312 and the second clamp 313 to the steering assembly 390 from the welding assembly 340, and then to convey to the welding assembly 340; the steering assembly 390 is configured to take out the battery cell 100 with the first connecting seam welded from the corresponding first clamp 312 and steer the battery cell, and then to place the battery cell on the second clamp 313; or, the steering assembly 390 is configured to take out the battery cell 100 with the second connecting seam welded from the corresponding second clamp 313 and steer the battery cell, and then to place the battery cell on the first clamp 312.

That is, the conveying line 311 can drive the first clamp 312 and the second clamp 313 to transfer circularly. The steering assembly 390 is configured to steer the battery cell 100 with the first connecting seam welded or the second connecting seam when the conveying line 311 moves circularly, so that the unwelded second connecting seam or the unwelded first connecting seam can be further welded win the circular moving process of the battery cell 100.

By means of above way, the steering assembly 390 can transfer the battery cell 100 from the first clamp 312 to the second clamp 313 or transfer the battery cell 100 from the second clamp 313 to the first clamp 312; when the battery cell 100 is placed on the first clamp 312, the first connecting seam can be welded; and when the battery cell 100 is placed on the second clamp 313, the second connecting seam can be welded. In addition, the first connecting seam and the second connecting seam can be welded by the same welding assembly 340, which decreases the cost of the welding apparatus.

According to one or more embodiments of the present application, the steering assembly 390 includes a supporting frame 391, a clamping jaw mechanism 392 and a steering motor 393; the supporting frame 391 is arranged on the outer side of the conveying line 311, and the clamping jaw mechanism 392 is located above the conveying line 311 and is rotationally supported on the supporting frame 391; the steering motor 393 is in transmission connection with the clamping jaw mechanism 392 and is configured to drive the clamping jaw mechanism 392 to rotate relative to the supporting frame 391 so as to steer; and the clamping jaw mechanism 392 is configured to clamp the battery cell 100 and steer the battery cell 100.

The clamping jaw mechanism 392 can clamp the battery cell 100, and the steering motor 393 drives the clamping jaw mechanism 392 to rotate so as to steer the battery cell 100. By means of above way, the steering motor 393 can drive the clamping jaw mechanism 392 clamping the battery cell 100 to rotate so as to steer the battery cell 100.

According to one or more embodiments of the present application, the steering assembly 390 includes a lifting frame 394 and a lifting motor 395; the lifting frame 394 is supported on the supporting frame 391 in a lifting mode, and the clamping jaw mechanism is rotationally arranged on the lifting frame 394; and the lifting motor 395 is arranged on the supporting frame 391 or the lifting frame 394, is in transmission connection with the lifting frame 394 and is configured to drive the lifting frame 394 to lift up and down relative to the supporting frame 391.

In the process that the battery cell 100 moves along with the material conveying assembly 310, the lifting motor 395 drives the lifting frame 394 to lift down, and then to drive the clamping jaw mechanism 392 to lift down to pick up the battery cell 100. Then the lifting frame 394 lifts up, thus the clamping jaw mechanism 392 clamps the battery cell 100 to be separated from the first clamp 312 or the second clamp 313. After the battery cell 100 is separated from the first clamp 312 or the second clamp 313, the steering motor 393 drives the clamping jaw mechanism 392 to rotate, thus steering the battery cell 100. After the battery cell 100 is steered, the lifting motor 395 drives the lifting frame 394 to lift down and to drive the clamping jaw mechanism 392 to lift down, and meanwhile, the conveying line drives the first clamp 312 or the second clamp 313 to synchronously move to be below the clamping jaw mechanism 392 so as to receive the battery cell 100 put down by the clamping jaw mechanism 392.

By means of above way, the steering assembly 390 can take out the battery cell 100 from the first clamp 312 or the second clamp 313 and then steer the battery cell 100, which reduces the possibility that the battery cell 100 interferes with other apparatuses in the steering process.

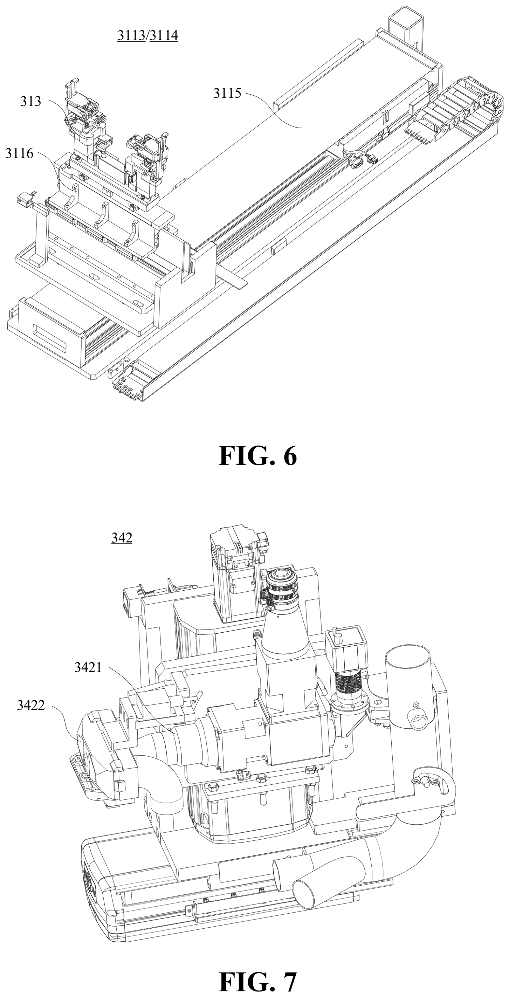

With reference to FIG. 2 and FIG. 6, according to one or more embodiments of the present application, the conveying line 311 includes a first conveying branch line 3111, a second conveying branch line 3112, a first transferring mechanism 3113 and a second transferring mechanism 3114; the first conveying branch line 3111 and the second conveying branch line 3112 are arranged side by side, and are opposite in conveying direction; the first transferring mechanism is arranged at one end of the first conveying branch line 3111 and one end of the second conveying branch line 3112 and configured to transfer the first clamp 312 and the second clamp 313 from the first conveying branch line 3111 to the first conveying branch line 3111; the second transferring mechanism 3114 is arranged at the other end of the first conveying branch line 3111 and the other end of the second conveying branch line 3112 and configured to transfer the first clamp 312 and the second clamp 313 from the second conveying branch line 3112 to the first conveying branch line 3111; and the welding assembly 340 is arranged along the first conveying branch line 3111, and the steering assembly 390 is arranged along the second conveying branch line 3112.

With reference to FIG. 6, the first transferring mechanism 3113/the third transferring mechanism can include a linear motor, and a transferring member 3116 which can be driven by the linear motor to move. The first clamp 312 and the second clamp 313 can be borne on the transferring member 3116.

The first conveying branch line 3111 can convey the first clamp 312 and the second clamp 313 to the first transferring mechanism 3113, the first transferring mechanism 3113 conveys the first clamp 312 and the second clamp 313 to the second conveying branch line 3112, the second conveying branch line 3112 conveys the first clamp 312 to the second transferring mechanism 3114, and the second transferring mechanism 3114 can convey the first clamp 312 and the second clamp 313 to the first conveying branch line 3111. Therefore, the battery cell 100 can circularly move along with the conveying assembly.

By means of above way, the first clamp 312 and the second clamp 313 can circularly move along with the conveying line 311, and therefore the end cover welding apparatus 30 can circularly and uninterruptedly assemble and weld the battery cell 100. In addition, the welding assembly 340 and the steering assembly 390 are arranged in different areas, which facilitates a user to observe and maintain the welding apparatus.

With reference to FIG. 2 and FIG. 7, according to one or more embodiments of the present application, the welding assembly 340 includes a first welding mechanism 341 and a second welding mechanism 342 which are arranged at intervals along the conveying line 311; and the first welding mechanism 341 is configured to pre-weld the first connecting seam or the second connecting seam, and the second welding mechanism 342 is configured to further weld the first connecting seam or the second connecting seam after pre-welding.

The first welding mechanism 341 and the second welding mechanism 342 can include lasers. The lasers can perform pre-welding for further welding in a galvanometer control mode, or perform pre-welding or further welding in an integrally moving way.

The pre-welding may refer to that the first connecting seam or the second connecting seam is welded in a spot welding mode. By means of above way, the welding quality can be improved.

Generally, pre-welding can be performed on the first connecting seam or the second connecting seam with the length exceeding the preset length, and pre-welding can also not be performed on a connecting seam with the length not exceeding the preset length. For example, in some embodiments, if the length of the first connecting seam exceeds the preset length, and the length of the second connecting seam does not exceed the preset length, only the first connecting seam can be pre-welded.

According to one or more embodiments of the present application, the first welding mechanism 341 includes two pre-welding mechanisms which are oppositely arranged on the two sides of the conveying line 311; the second welding mechanism 342 includes two full-welding mechanisms 3421 which are oppositely arranged on the two sides of the conveying line 311; the two pre-welding mechanisms are configured to perform pre-welding on the first connecting seam or the second connecting seam in related directions; and the two full-welding mechanisms 3421 are configured to perform full-welding on the first connecting seam or the second connecting seam in related directions respectively.

The two pre-welding mechanisms can perform pre-welding on the two first connecting seams or the two second connecting seams at the same time in a spot welding mode. The two full-welding mechanisms 3421 can perform full-welding on the two first connecting seams or the two second connecting seams at the same time in a continuous welding mode.

By means of above way, the two first connecting seams/the two second connecting seams can be welded at the same time, thereby improving the welding efficiency.

In addition, the second welding mechanism 342 can include the full-welding mechanisms 3421 and a dust removal mechanism 3422. The dust removal mechanism 3422 can be fixed relative to the full-welding mechanisms 3421 and configured to preliminarily remove smoke and dust, generated by the full-welding mechanisms 3421 in the welding process, by negative pressure airflow.

According to one or more embodiments of the present application, the second welding mechanism 342 is configured to perform first welding on the pre-welded first connecting seam or the pre-welded second connecting seam in a first direction and perform second welding on the first connecting seam or the second connecting seam subjected to first-time welding in a second direction, and the first direction and the second direction are opposite.

The second welding mechanism 342 can weld the first connecting seam or the second connecting seam twice. By means of above way, the welding quality can be improved, and the problem of insufficient molten pool of a welding wire is relieved.

According to one or more embodiments of the present application, the welding assembly 340 includes at least one full welding mechanism 3421 which is configured to carry out full welding on the first connecting seam or the second connecting seam.

By means of above way, the use of the pre-welding mechanisms can be reduced, and thus the manufacturing cost can be decreased.

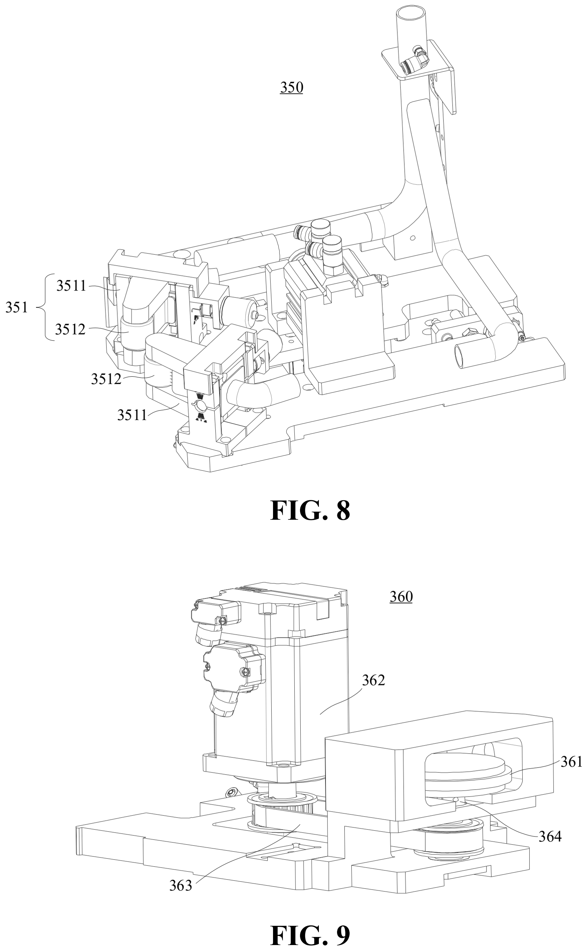

With reference to FIG. 8, according to one or more embodiments of the present application, the end cover welding apparatus 30 includes a rolling assembly 350 which is spaced from the welding assembly 340; and the rolling assembly 350 is configured to roll the battery cell 100 welded by the welding assembly 340 so as to roll the welding flux on the first connecting seam or the second connecting seam.

By means of above way, welding seams of the first connecting seam and the second connecting seam can be shaped, thus improving the surface quality of the welding seams.

According to one or more embodiments of the present application, the rolling assembly 350 includes two rolling mechanisms 351 which are oppositely arranged on the two sides of the conveying line 311; and the two rolling mechanisms 351 are used for abutting against the battery cell 100 from the two sides of the conveying line 311 so as to roll the first connecting seam or the second connecting seam and the flanging, exceeding the case 101, of the end cover 102.

By means of above way, the welding seam of the first connecting seam and the second connecting seam and the end cover 102 can be shaped, which improves the surface quality of the battery cell 100.

According to one or more embodiments of the present application, each rolling mechanism 351 includes a support 3511 and two rollers 3512; the support 3511 is arranged on the outer side of a conveying line 311; the two rollers 3512 are arranged at an interval on the support 3511 along an extending direction of the conveying line 311, so that the battery cell 100 can pass through the two rollers 3512 sequentially; and the two rollers 3512 are rotatably arranged on the support 3511 so as to roll the battery cell 100.

By means of above way, the two rollers 3512 can carry out secondary rolling shaping on the welding seams of the first connecting seams and the second connecting seams, which further improves the surface quality of the welding seams.

With reference to FIG. 9, according to one or more embodiments of the present application, the end cover welding apparatus 30 includes a welding slag cleaning component 360 which is spaced from the welding assembly 340 along the conveying line 311; and the welding slag cleaning component 360 is configured to clean the welding slag on the battery cell 100 welded by the welding assembly 340, so that the welding slag is separated from the battery cell 100.

The welding slag cleaning component 360 includes a steel wire brush 361 which is columnar and is rotatable. Moreover, the welding slag cleaning component 360 can also be configured to clean the welding slag of the battery cell 100 through airflow.

By means of above way, the possibility that foreign matters such as the welding slag are left on the battery cell 100 can be reduced.

In addition, the welding slag cleaning component 360 further includes an active motor 362, a synchronous belt 363 and a driving shaft 364. The steel wire brush 361 can be fixed on the driving shaft 364. The active motor 362 can drive the driving shaft 364 to rotate by the synchronous belt 363 so as to drive the steel wire brush 361 to rotate. In this way, the probability of the welding slag remaining can be further reduced.

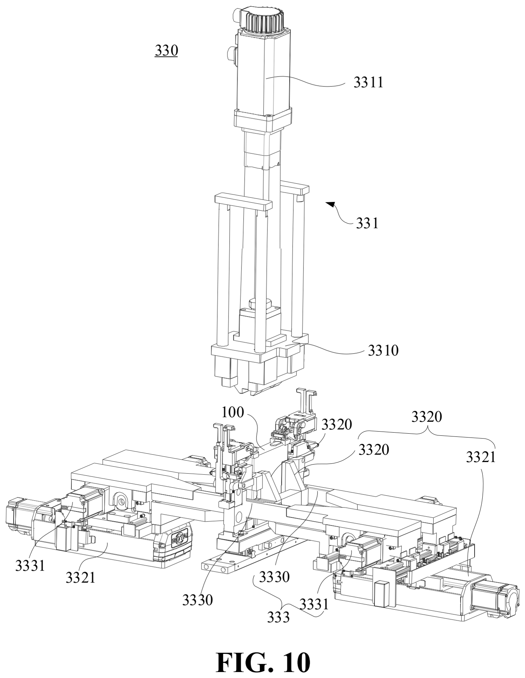

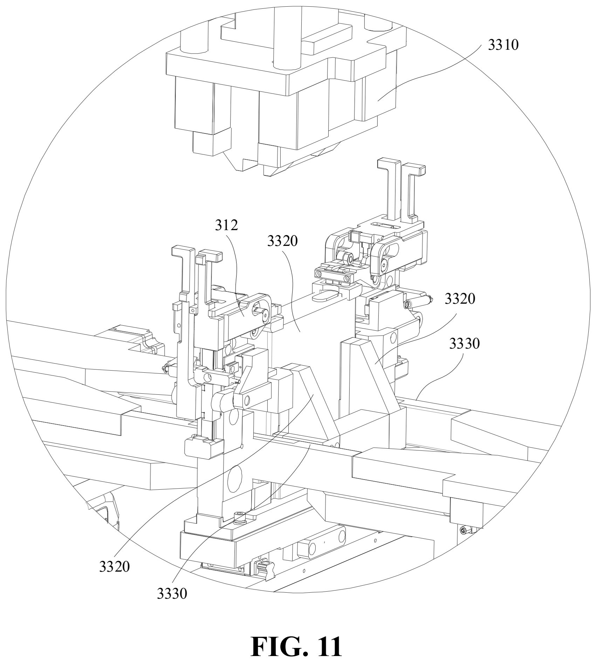

With reference to FIG. 10 and FIG. 11, according to one or more embodiments of the present application, the end cover welding apparatus 30 includes a press-fitting assembly 330 which is spaced from the welding assembly 340 along the conveying line 311; the press-fitting assembly 330 is configured to press-fit the case 101 and the end cover 102 before the battery cell 100 is conveyed to the welding assembly 340; and the welding assembly 340 is configured to weld the battery cell 100 after press-fitting.

By means of above way, the press-fitting assembly 330 can press-fit the end cover 102 and the case 101, so that the possibility of offset during assembling is reduced.

The press-fitting assembly 330 can include an end cover press-fitting mechanism 331, a first side surface press-fitting mechanism 332 and a second side surface press-fitting mechanism 333. The end cover press-fitting mechanism 331 can include a first driving motor 3311, and an end cover press-fitting block 3310 in transmission connection with the first driving motor 3311; and the end cover press-fitting block 3310 can be configured to perform press-fitting limiting on the battery cell 100 from the side with the end cover 102 of the battery cell 100. The first side surface press-fitting mechanism 332 can include a second driving motor 3321, and a first side surface press-fitting block 3320 in transmission connection with the second driving motor 3321; and the first side surface press-fitting block 3320 can be configured to perform press-fitting limiting on the first side surface 1011 of the case 101. The second side surface press-fitting mechanism 333 can include a third driving motor 3331, and a second side surface press-fitting block 3330 in transmission connection with the third driving motor 3331; and the second side surface press-fitting block 3330 can be configured to perform press-fitting limiting on the second side surface 1012 of the case 101. Therefore, the battery cell 100 can be positioned in the press-fitting process, which is conducive to accurately welding the first connecting seam or the second connecting seam by laser.

Two first side surface press-fitting mechanisms 332 can be provided and arranged on the two opposite sides and configured to perform press-fitting on two first side surfaces 1011. Two second side surface press-fitting mechanisms 333 can be provided and arranged at the two opposite ends and configured to perform press-fitting on two second side surfaces 1012.

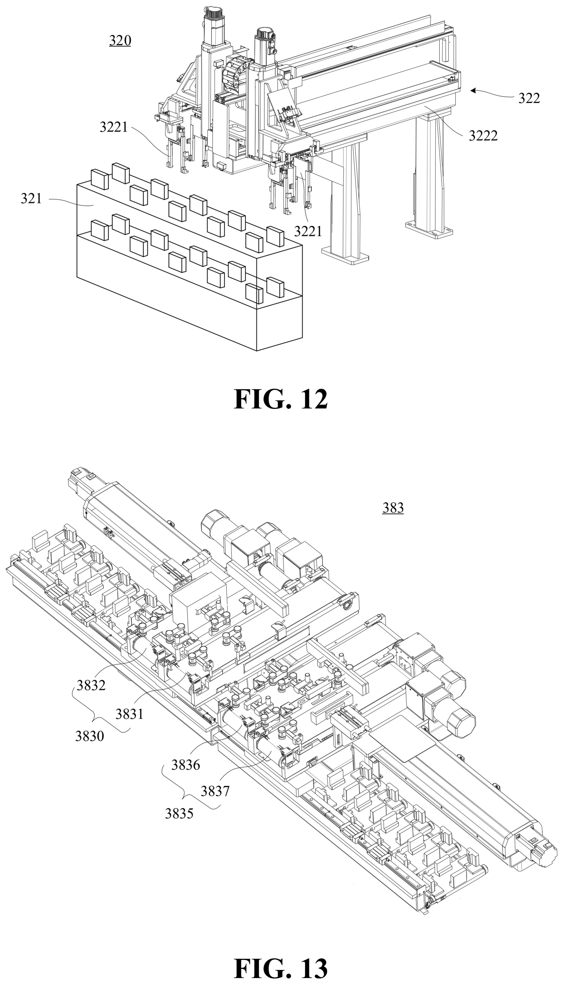

With reference to FIG. 12, according to one or more embodiments of the present application, the end cover welding apparatus 30 includes a feeding assembly 320 which is spaced from the conveying line 311; and the feeding assembly 320 is configured to place the battery cell 100 to be fed and welded onto the first clamp 312 or the second clamp 313.

By means of above way, the end cover welding apparatus 30 can achieve automatic feeding.

According to one or more embodiments of the present application, the feeding assembly 320 includes a material storage mechanism 321 and a feeding mechanism 322; the material storage mechanism 321 is configured to store the battery cell 100 to be fed and welded; and the feeding mechanism 322 is arranged along the conveying line 311 and configured to take out the corresponding battery cell 100 from the material storage mechanism 321 and place the battery cell 100 onto the first clamp 312 or the second clamp 313.

By means of above way, the end cover welding apparatus 30 can be configured to assemble the battery cells 100 in batches.

According to one or more embodiments of the present application, the material storage mechanism 321 is configured to store the battery cell 100 in a preset placement posture relative to the conveying line 311; the feeding mechanism 322 is configured to take out the battery cells 100 in the preset placement posture from the material storage mechanism 321 and convey the battery cells 100 to the first clamp 312 in the preset placement posture, and the preset placement posture is consistent with the fixing posture needed by the first clamp 312.

The feeding mechanism 322 can include a battery cell picking clamping jaw 3221 and a transverse moving motor 3222. The battery cell picking clamping jaw 3221 can be configured to pick up the battery cell 100 of the material storage mechanism 321. The transverse moving motor 3222 can drive the battery cell picking clamping jaw 3221 to move between the material storage mechanism 321 and the conveying line 311 in a reciprocating mode so as to convey the battery cell 100 of the material storage mechanism 321 to the first clamp 312 in a reciprocating mode.

By means of above way, the feeding efficiency of the feeding assembly 320 can be improved.

With reference to FIG. 2 and FIG. 13, according to one or more embodiments of the present application, the end cover welding apparatus 30 includes a discharging assembly which is spaced from the conveying line 311; and the discharging assembly is configured to take out the welded battery cell 100 from the conveying line 311 and convey the welded battery cell 100 outwards.

By means of above way, the end cover welding apparatus 30 can automatically discharge.

According to one or more embodiments of the present application, the discharging assembly includes a transferring mechanism 381 and a conveying mechanism 382; the transferring mechanism 381 is arranged along the conveying line 311 and configured to transfer the welded battery cell 100 from the conveying line 311 to the conveying mechanism 382; and the conveying mechanism 382 is configured to convey the corresponding battery cell 100 outwards.

By means of above way, the end cover welding apparatus 30 can discharge by the transferring mechanism 381 and the conveying mechanism 382 which are independent of the conveying line 311, which reduces the possibility that the conveying line 311 is shut down due to discharging.

According to one or more embodiments of the present application, the conveying mechanism 382 includes a first conveying sub-mechanism 383 and a second conveying sub-mechanism 384; the transferring mechanism 381 is configured to transfer the battery cell 100 which is welded and passes the detection from the conveying line 311 to the first conveying sub-mechanism 383, and to transfer the battery cell 100 which is welded and does not pass the detection from the conveying line 311 to the second conveying sub-mechanism 384; and the first conveying sub-mechanism 383 and the second conveying sub-mechanism 384 are configured to convey the battery cells 100 borne by the first conveying sub-mechanism 383 and the second conveying sub-mechanism 384 outwards respectively.

The first conveying sub-mechanism 383 can also be called a discharging drawstring. The second conveying sub-mechanism 384 can also be called an NG drawstring.

By means of above way, the qualified battery cells and the unqualified battery cells 100 can be discharged respectively, which is conducive to recovering the unqualified battery cells 100 and post-treating the qualified battery cells 100.

According to one or more embodiments of the present application, the first conveying sub-mechanism 383 includes a first drawstring mechanism 3830 and a second drawstring mechanism 3835 which can move relative to the transferring mechanism 381 and can move between a carrying position and an output position, and the first drawstring mechanism 3830 and the second drawstring mechanism 3835 are configured to move to the output position or being away from the output position; the first drawstring mechanism 3830 and the second drawstring mechanism 3835 store the battery cells 100 transferred by the transferring mechanism 381 when in the output position; and the first drawstring mechanism 3830 and/or the second drawstring mechanism 3835 are/is configured to store the battery cells 100 and move to the output position to output the corresponding pair of battery cells 100 after the pair of battery cells 100 are successfully paired.

By means of above way, the first drawstring mechanism 3830 and the second drawstring mechanism 3835 work at the same time, which improves the pairing and discharging efficiency.

According to one or more embodiments of the present application, the first drawstring mechanism 3830 includes a first conveying drawstring 3831 and a first temporary storing drawstring 3832; the second drawstring mechanism 3835 includes a second conveying drawstring 3836 and a second temporary storing drawstring 3837; the first conveying drawstring 3831 and the first temporary storing drawstring 3832 are arranged side by side, and the second conveying drawstring 3836 and the second temporary storing drawstring 3837 are arranged side by side; the first conveying drawstring 3831 and the second conveying drawstring 3836 are arranged side by side at an interval and are located on two sides of the output position; the first conveying drawstring 3831 and the first temporary storing drawstring 3832 can move towards the output position together or move far away from the output position; the second conveying drawstring 3836 and the second temporary storing drawstring 3837 can move towards the output position together or move far away from the output position; the first temporary storing drawstring 3832 and the second temporary storing drawstring 3837 are respectively configured to temporarily storing another battery cell 100 to be paired when one battery cell 100 to be paired is transferred to the second drawstring mechanism 3835; the first conveying drawstring 3831 and the second conveying drawstring 3836 are respectively configured to store the battery cell 100 to be paired; when the battery cell 100 is temporarily stored on the first temporary storing drawstring 3832, the battery cell 100 stored on the first conveying drawstring 3831 is paired with the battery cell 100 temporarily stored on the first temporary storing drawstring 3832; when the battery cell 100 is temporarily stored on the second temporary storing drawstring 3837, the battery cell 100 stored on the second conveying drawstring 3836 is paired with the battery cell 100 temporarily stored on the second temporary storing drawstring 3837; and when the battery cell 100 is not temporarily stored on the first temporary storing drawstring 3832 and the battery cell 100 is not temporarily stored on the second temporary storing drawstring 3837, the battery cell 100 stored on the first conveying drawstring 3831 is paired with the battery cell 100 stored on the second conveying drawstring 3836.

When the battery cell 100 is stored on the first conveying drawstring 3831 and the battery cell 100 is not stored on the second conveying drawstring 3836 (for example, the battery cell 100 to be placed on the second conveying drawstring 3836 is originally unqualified and is transferred to the second conveying sub-mechanism 384), the battery cell 100 on the first conveying drawstring 3831 cannot be paired at the moment, and the battery cell 100 on the first conveying drawstring 3831 can be transferred to the first temporary storing drawstring 3832. In the same way, when the battery cell 100 on the second conveying drawstring 3836 is not paired, it can also be transferred to the second temporary storing drawstring 3837.

When the battery cell 100 is temporarily stored on the first temporary storing drawstring 3832, the battery cell 100 stored on the first conveying drawstring 3831 and the battery cell 100 temporarily stored on the first temporary storing drawstring 3832 are paired, and then the first conveying drawstring 3831 and the first temporary storing drawstring 3832 move to the output position together so as to discharge the paired battery cells 100.

When the battery cell 100 is temporarily stored on the second temporary storing drawstring 3837, the battery cell 100 stored on the second conveying drawstring 3836 and the battery cell 100 temporarily stored on the second temporary storing drawstring 3837 are paired, and then the first conveying drawstring 3831 and the first temporary storing drawstring 3832 move to the output position together so as to discharge the paired battery cells 100.

When the battery cells 100 are not temporarily stored on the first temporary storing drawstring 3832 and the second temporary storing drawstring 3837 and the battery cells 100 are stored on both the first conveying drawstring 3831 and the second conveying drawstring 3836, the battery cells 100 on the first conveying drawstring 3831 and the battery cells 100 on the second conveying drawstring 3836 can be paired and discharged.

By means of above mode, the pairing efficiency in the discharging process can be improved, and the risk that discharging is delayed because the qualified battery cell 100 is not stored in any one of the first conveying drawstring 3831 and the second conveying drawstring 3836 is reduced.

According to one or more embodiments of the present application, the end cover welding apparatus 30 includes a post-welding detection assembly 370 which is arranged between the welding assembly 340 and the transferring mechanism 381 along the conveying line 311; and the post-welding detection assembly 370 is configured to detect whether the welded battery cell 100 is qualified or not.

The post-welding detection assembly 370 can carry out imaging identification on the battery cell 100 by a 2D camera or a 3D camera. In this way, the qualified and unqualified battery cells 100 can be efficiently identified by the post-welding detection assembly 370.

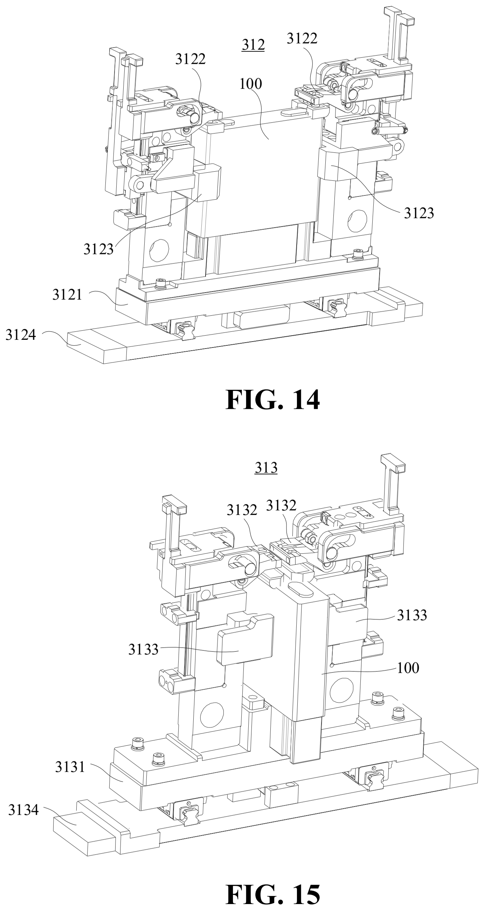

With reference to FIG. 14 and FIG. 15, according to one or more embodiments of the present application, the first clamp 312 includes a first bearing mechanism 3121 and a first holding member 3122; the first bearing mechanism 3121 is configured to bear the battery cell 100, and the first holding member 3122 is arranged on the first bearing mechanism 3121 and configured to position the battery cell 100 borne on the first bearing mechanism 3121; the second clamp 313 includes a second bearing mechanism 3131 and a second holding member 3132; the second bearing mechanism 3131 is configured to bear the battery cell 100, and the second holding member 3132 is arranged on the second bearing mechanism 3131 and configured to position the battery cell 100 borne on the second bearing mechanism 3131.

By means of above way, the battery cell 100 is positioned, so that the possibility that the battery cell 100 shakes in the assembling and machining process is reduced.

The battery cell 100 needs to be steered by the steering assembly 390 while moving along with a conveying line 311. Therefore, the first holding member 3122 can have a holding status and a releasing status; when it is needed to weld an detect the battery cell 100, the first holding member 3122 can be in the holding status to position the battery cell 100; and when the battery cell 100 moves to the steering assembly 390, the first holding member 3122 can be in the releasing status so that the steering assembly 390 can steer the battery cell 100. Before the battery cell 100 is subjected to press-fitting by the press-fitting assembly 330, the first holding member 3122/the second holding member 3132 can be in the releasing status; after press-fitting is completed, the first holding member 3122/the second holding member 3132 can be in the holding status; and after the battery cell 100 moves to the steering assembly 390, it is switched to the releasing status.

According to one or more embodiments of the present application, the first clamp 312 further includes two first side fasteners 3123 which are oppositely arranged; the two first side fasteners 3123 are configured to pre-limit the battery cell 100 which is borne on the first bearing mechanism 3121 and is arranged between the two first side fasteners 3123; the second clamp 313 further includes two second side fasteners 3133 which are oppositely arranged; and the two second side fasteners 3133 are configured to pre-limit the battery cell 100 which is borne on the second bearing mechanism 3131 and is arranged between the two first side fasteners 3123. The spacing distance between the two first side fasteners 3123 is different from that between the two second side fasteners 3133.

The pre-limiting the battery cell 100 may be to maintain the battery cell 100 in a preset status substantially, for example, the battery cell 100 is maintained in an upright status substantially. The first side fasteners 3123/the second side fasteners 3133 can be in a semi-surrounding structure, thus making contact with the battery cell 100 to provide lateral supporting when the battery cell 100 is arranged between the two first side fasteners 3123/second side fasteners 3133, or there is a gap relative to the case 101 of the battery cell 100 when the battery cell 100 is arranged between the two second side fasteners 3133, thus providing lateral supporting for the battery cell 100 when a battery topples over.

By means of above way, with adoption of the first side fasteners 3123 and the second side fasteners 3133, the battery cell 100 can be arranged on the first bearing mechanism 3121 and the second bearing mechanism 3131 in a substantially upright manner, thereby reducing possibility of toppling over of the battery cell 100.

According to one or more embodiments of the present application, the first clamp 312 also includes a first base 3124, the first bearing mechanism 3121 is arranged on the first base 3124 in a sliding manner, and the sliding direction of the first bearing mechanism 3121 is vertical to the conveying direction of the conveying line 311; and the second clamp 313 also includes a second base 3134, the second bearing mechanism 3131 is arranged on the second base 3134 in a sliding manner, and the sliding direction of the second bearing mechanism 3131 is vertical to the conveying direction of the conveying line 311.

Specifically, when the first clamp 312 or the second clamp 313 moves to a welding area of the welding assembly 340, the first bearing mechanism 3121 can be pushed to transfer relative to the first base 3124 by an external mechanism, or the second bearing mechanism 3131 is pushed to transfer relative to the second base 3134, so that the first connecting seam or the second connecting seam can be accurately located in the processing area of the welding assembly 340. When the first clamp 312 or the second clamp 313 moves to the rolling assembly 350, and if the first clamp 312 or the second clamp 313 is fixed to the conveying line 311, the rolling assembly 350 might not uniformly roll the two welding seams, consequently, the rolling shaping efficiency is reduced. When the first clamp 312 or the second clamp 313 moves to the welding slag cleaning assembly 360, and if the position of the first clamp 312 or the second clamp 313 is not proper, the effect of cleaning welding slag of the welding slag cleaning assembly 360 might be reduced. Therefore, the first bearing mechanism 3121 or the second bearing mechanism 3131 can be pushed to move by the external mechanism, and thus the welding slag cleaning assembly 360 can clean the welding slag of the first connecting seam or the second connecting seam.

By means of above way, the first bearing mechanism 3121 and the second bearing mechanism 3131 can move in the direction perpendicular to the conveying direction of the conveying line 311, so that the battery cell 100 can move to a proper to-be-processed area in any step of assembling and processing.

In consideration of that in the process that the steering assembly 390 steers the battery cell 100 on the first clamp 312 and then places the battery cell 100 to the second clamp 313 or steers the battery cell 100 on the second clamp 313 and then places the battery cell 100 to the first clamp 312, the precision of the steering assembly 390 may be not enough, then the placement position of the battery cell 100 has large randomness to a certain degree, which may influence subsequent processing.

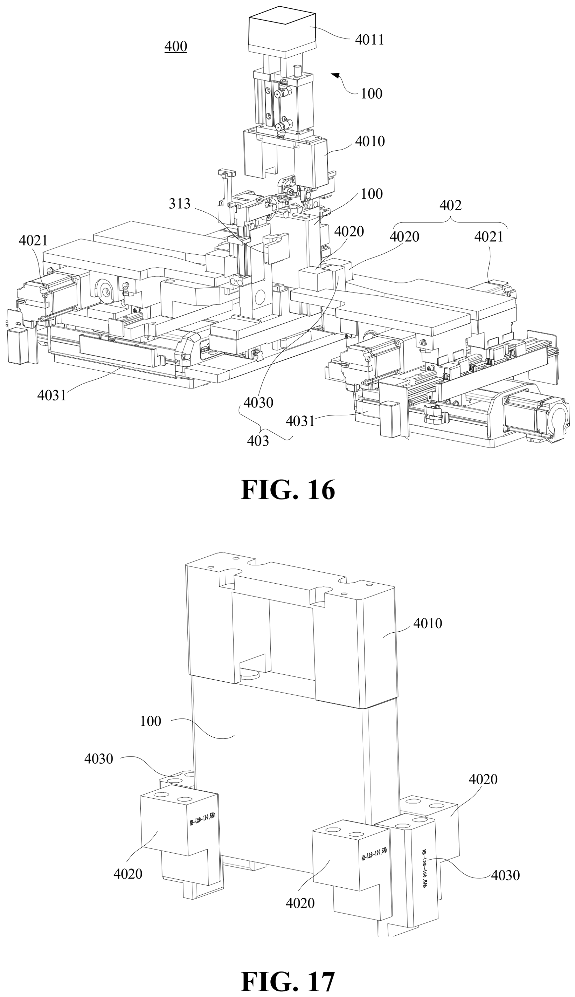

Therefore, with reference to FIG. 16 and FIG. 17, the end cover welding apparatus 30 can include a positioning assembly 400 which is configured to position the steered battery cell 100. The positioning assembly 400 can include an end cover positioning mechanism 401, first side surface positioning mechanisms 402 and second side surface positioning mechanisms 403. The end cover positioning mechanism 401 can include a fourth driving motor 4011, and an end cover positioning block 4010 in transmission connection with the fourth driving motor 4011; and the end cover positioning block 4010 can position and limit the battery cell 100 from the side with the end cover 102 of the battery cell 100. Each first side surface positioning mechanism 402 can include a fifth driving motor 4021, and a first side surface positioning block 4020 in transmission connection with the fifth driving motor 4021; and the first side surface positioning block 4020 can position and limit the first side surface 1011 of the case 101. Each second side surface positioning mechanism 403 can include a sixth driving motor 4031, and a second side surface positioning block 4030 in transmission connection with the sixth driving motor 4031; and the second side surface positioning block 4030 can position and limit the second side surface 1012 of the case 101. Therefore, the battery cell 100 can be positioned in the positioning process, which is conducive to accurately welding the first connecting seam or the second connecting seam by laser. In addition, two first side surface positioning mechanisms 402 can be provided, and the two first side surface positioning mechanisms 402 can be arranged on the two opposite sides and configured to position the two first side surfaces 1011. Two second side surface positioning mechanisms 403 can be provided, and the two second side surface positioning mechanisms 403 can be arranged at the two opposite ends and configured to position the two second side surfaces 1012.

After the battery cell is steered by the positioning assembly, and before the steered battery cell is positioned by the positioning assembly, the second holding member/the first holding member can be in the releasing status; and after the steered battery cell is positioned by the positioning assembly, the second holding member/the first holding member can be in the holding status.

According to one or more embodiments of the present application, the case 101 includes two first side walls which are oppositely arranged, and two second side walls which are oppositely arranged; the two first side walls and the two second side walls are arranged in a staggered manner along the circumferential direction of the case 101; the first connecting seam is positioned between the two first side walls along the circumferential direction of the case 101; and the second connecting seam is positioned between the two second side walls along the circumferential direction of the case 101.

By means of above way, the end cover welding apparatus can be configured to assemble the quadrangular battery cell.

According to one or more embodiments of the present application, the battery assembling system includes a conveying device and an assembling device, and the conveying device is configured to convey to-be-assembled structures to each station of the assembling device; the stations of the assembling device at least include a tab welding apparatus, a case entering apparatus, a tab penetrating apparatus, a terminal post welding apparatus and an end cover welding apparatus; the tab welding apparatus is configured to weld a plurality of tab sheets of the electrode assembly to form the tab portion; the case entering apparatus is configured to mount the electrode assembly into the case from the open end; the tab penetrating apparatus is configured to clamp the tab portion to penetrate through the through hole when the electrode assembly is mounted into the case; and the terminal post welding apparatus is configured to weld the tab portion penetrating through the through hole to the side, away from the accommodating cavity, of the terminal post.

It is to be noted that, in this embodiment, the conveying device includes the conveying line, and the conveying line can be of a conveying structure formed by a conveying roller driven by a motor in match with a conveying belt, can also be of a conveying structure formed by hinging conveying chain links driven by the motor, and can also be an AGV conveying trolley; and the conveying line can perform conveying in at least one direction, and supports to ensure the stability of the to-be-assembled structure.

The tab welding apparatus is configured to pre-weld the tab sheets to form the tab portion, and it can be as ultrasonic welding device and can ensure that tabs can be welded in a stable clamping status. The tab entering apparatus is a pushing mechanism or a clamping mechanism, and which can make an electrode assembly stably move towards the open end of the case and enter the accommodating cavity through the open end. In a similar way, the tab penetrating apparatus can be of a clamping structure or a guiding structure for guiding the tab portion to smoothly penetrate through the through hole without interfering with the case. The terminal post welding apparatus is configured to weld the tab portion and the terminal post, and it can be a laser welding device. The end cover welding apparatus is configured to perform circumferential edge welding on the open end of the end cover and the case, and it is also the laser welding device.

In addition, the assembling device is not limited to the tab welding apparatus, the tab entering apparatus, the tab penetrating apparatus, the terminal post welding apparatus and the end cover welding apparatus. Exemplarily, when there are a plurality of electrode assemblies, for example, there are two electrode assemblies, the assembling device further includes a pairing apparatus, the pairing apparatus is configured to laminate the plurality of electrode assemblies to make the tab sheets of the two electrode assemblies approximately opposite, thus facilitating the conveying structure to convey the paired electrode assemblies to the tab welding apparatus for welding of the tab sheets, and further facilitating the formation of the tab portion. Exemplarily, in order to ensure the reliability of the battery assembling process, a dust removal station, an NG detection station and the like can be added between any two adjacent stations, which is not limited in this embodiment. It is to be noted that, in this embodiment, the conveying device includes the conveying line, and the conveying line can be of a conveying structure formed by a conveying roller driven by a motor in match with a conveying belt, can also be of a conveying structure formed by hinging conveying chain links driven by the motor, and can also be an AGV conveying trolley; and the conveying line can perform conveying in at least one direction, and supports to ensure the stability of the to-be-assembled structure.

The tab welding apparatus is configured to pre-weld the tab sheets to form the tab portion, and it can be as ultrasonic welding device and can ensure that tabs can be welded in a stable clamping status. The tab entering apparatus is a pushing mechanism or a clamping mechanism, and which can make an electrode assembly stably move towards the open end of the case and enter the accommodating cavity through the open end. In a similar way, the tab penetrating apparatus can be of a clamping structure or a guiding structure for guiding the tab portion to smoothly penetrate through the through hole without interfering with the case. The terminal post welding apparatus is configured to weld the tab portion and the terminal post, and it can be a laser welding device. The end cover welding apparatus is configured to perform circumferential edge welding on the open end of the end cover and the case, and it is also the laser welding device.

In addition, the assembling device is not limited to the tab welding apparatus, the tab entering apparatus, the tab penetrating apparatus, the terminal post welding apparatus and the end cover welding apparatus. Exemplarily, when there are a plurality of electrode assemblies, for example, there are two electrode assemblies, the assembling device further includes a pairing apparatus, the pairing apparatus is configured to laminate the plurality of electrode assemblies to make the tab sheets of the two electrode assemblies approximately opposite, thus facilitating the conveying structure to convey the paired electrode assemblies to the tab welding apparatus for welding of the tab sheets, and further facilitating the formation of the tab portion. Exemplarily, in order to ensure the reliability of the battery assembling process, a dust removal station, an NG detection station and the like can be added between any two adjacent stations, which is not limited in this embodiment.

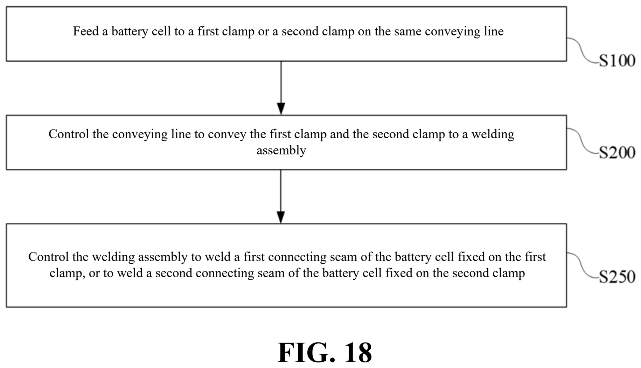

With reference to FIG. 18, according to one or more embodiments of the present application, an assembling method for a battery cell includes: step S100: feeding the battery cell to a first clamp or a second clamp on the same conveying line, the first clamp being configured to fix the case and expose the first connecting seam, and the second clamp being configured to fix the case and expose the second connecting seam; step S200: controlling the conveying line to convey the first clamp and the second clamp to a welding assembly; and step S250: controlling the welding assembly to weld the first connecting seam of the battery cell fixed on the first clamp, or to weld the second connecting seam of the battery cell fixed on the second clamp.

By means of above way, when the battery cell is placed on the first clamp, the first connecting seam can be welded by the welding assembly; and when the battery cell is placed on the second clamp, the second connecting seam can be welded by the welding assembly. Therefore, the welding assembly can be configured to weld the first connecting seam and can also be configured to weld the second connecting seam, thereby decreasing the manufacturing cost of the end cover welding apparatus.

According to one or more embodiments of the present application, step S200 includes: controlling a press-fitting assembly to press-fit the battery cell fed to the first clamp or the second clamp so as to press-fit the case and the end cover.

By means of above way, the end cover 102 and the case 101 can be combined by press-fitting by the press-fitting assembly, which reduces the possibility of offset of the end cover and the case during assembling.

According to one or more embodiments of the present application, step S250 includes: controlling a first welding mechanism to pre-weld the first connecting seam or the second connecting seam of the battery cell; and controlling a second welding mechanism to fully weld the first connecting seam or the second connecting seam after pre-welding.

By means of above way, the welding quality can be improved.

According to one or more embodiments of the present application, the controlling a first welding mechanism to pre-weld the first connecting seam or the second connecting seam of the battery cell includes: controlling two oppositely-arranged pre-welding mechanisms to pre-weld parts of the first connecting seam or second connecting seam in related direction from two sides of the battery cell; and controlling two oppositely-arranged full-welding mechanisms to synchronously perform full-welding on parts of the first connecting seam or second connecting seam in related direction from two sides of the pre-welded battery cell.

By means of above way, the two first connecting seams/the two second connecting seams can be welded at the same time, thereby improving the welding efficiency.

According to one or more embodiments of the present application, after step S250, the method includes: controlling the conveying line to convey the welded battery cell to a rolling assembly by the corresponding first clamp or second clamp (step S300); and rolling the welded battery cell by virtue of the rolling assembly so as to roll a welding flux on the first connecting seam or the second connecting seam (step S350).

By means of above way, welding seams of the first connecting seam and the second connecting seam can be shaped, thus improving the surface quality of the welding seams.

According to one or more embodiments of the present application, step S350 includes: rolling parts of the first connecting seam and second connecting seam in related direction from two sides of the battery cell by virtue of two oppositely-arranged rolling mechanisms; and rolling a flange, exceeding the case, of the end cover.

By means of above way, the welding seams of the first connecting seam and the second connecting seam and the case can be shaped, thereby improving the surface quality of the battery cell.

According to one or more embodiments of the present application, after step S250, the method includes: controlling the conveying line to convey the welded battery cell to a welding slag cleaning assembly by the corresponding first clamp or second clamp (step S400); and controlling the welding slag cleaning assembly to clean welding slag attached to the welded battery cell, so as to separate the welding slag from the battery cell (step S450).

By means of above way, the possibility that foreign matters such as the welding slag are left on the battery cell can be reduced.

According to one or more embodiments of the present application, after step S250, the method includes: controlling the conveying line to convey the first clamp and the second clamp to a steering assembly (step S500); controlling the steering assembly to take out the battery cell with the first connecting seam welded from the first clamp and steer and place the battery cell on the second clamp, or to take out the battery cell welded with the second connecting seam from the second clamp and steer and place the battery cell on the first clamp (step S550); and controlling the conveying line to convey the second clamp and the first clamp to the welding assembly from the steering assembly (step S600).

By means of above way, the steering assembly can transfer the battery cell from the first clamp to the second clamp or transfer the battery cell from the second clamp to the first clamp; when the battery cell is placed on the first clamp, the first connecting seam can be welded; and when the battery cell is placed on the second clamp, the second connecting seam can be welded. In addition, the first connecting seam and the second connecting seam can be welded by the same welding assembly, thus decreasing the cost of a welding apparatus.

According to one or more embodiments of the present application, before step S600, the method includes: controlling a discharging assembly to take out the battery cell with the first connecting seam and the second connecting seam welded from the corresponding first clamp or the corresponding second clamp for discharging; and controlling the conveying line to convey the battery cell with the first connecting seam welded only from the corresponding first clamp to the steering assembly, and/or to convey the battery cell with the second connecting seam welded only from the corresponding second clamp to the steering assembly.

By means of above way, the welded battery cell can be discharged in time.

According to one or more embodiments of the present application, after step S250, the method includes: controlling a discharging assembly to take out the welded battery cell from the first clamp or the second clamp and discharge the welded battery cell.

By means of above way, automatic discharging can be realized.

According to one or more embodiments of the present application, the controlling a discharging assembly to take out the welded battery cell from the first clamp or the second clamp and discharge the welded battery cell includes: controlling a transferring mechanism to transfer the welded battery cell from the conveying line to the conveying mechanism, and controlling the conveying mechanism to convey the corresponding battery cell outwards.

By means of above way, discharging can be carried out by the transferring mechanism and the conveying mechanism which are independent of the conveying line, which reduces the possibility that the conveying line is shut down due to discharging, thereby improving the production efficiency.

According to one or more embodiments of the present application, the controlling a transferring mechanism to transfer the welded battery cell from the conveying line to the conveying mechanism, and controlling the conveying mechanism to convey the corresponding battery cell outwards includes: controlling the transferring mechanism to transfer the battery cell which is welded and passes detection from the conveying line to a first conveying sub-mechanism; controlling the transferring mechanism to transfer the battery cell which is welded and does not pass detection from the conveying line to a second conveying sub-mechanism; and controlling the first conveying sub-mechanism to convey the borne battery cell outwards, and controlling the second conveying sub-mechanism to convey the borne battery cell outwards.

By means of above way, the qualified battery cells and the unqualified battery cells can be discharged respectively, which is conducive to recovering the unqualified battery cells and post-treating the qualified battery cells.

According to one or more embodiments of the present application, the controlling the first conveying sub-mechanism to convey the borne battery cells outwards includes: after a pair of battery cells is stored in a first drawstring mechanism and/or a second drawstring mechanism and is successfully paired, controlling the first drawstring mechanism and/or the second drawstring mechanism to move from a carrying position to an output position, and outwards outputting the corresponding pair of battery cells.

By means of above way, the first drawstring mechanism and the second drawstring mechanism work at the same time, which is conducive to improving the pairing and discharging efficiency.

According to one or more embodiments of the present application, the after a pair of battery cells is stored in a first drawstring mechanism and/or a second drawstring mechanism and is successfully paired, controlling the first drawstring mechanism and/or the second drawstring mechanism to move from a carrying position to an output position, and outwards outputting the corresponding pair of battery cells includes: when the pair of battery cells to be paired is carried to the first conveying drawstring and the second conveying drawstring by the transferring mechanism, controlling the second conveying drawstring and the second conveying drawstring to move from the carrying position to the output position at the same time; when one battery cell to be paired is carried to the second drawstring mechanism by the transferring mechanism, temporarily storing the other battery cell to be paired by a first temporary storing drawstring or a second temporary storing drawstring; when the battery cell is temporarily stored in the first temporary storing drawstring, pairing the battery cell stored on the first conveying drawstring with the battery cell temporarily stored on the first temporary storing drawstring, and controlling the first conveying drawstring and the first temporary storing drawstring to move from the carrying position to the output position; and when the battery cell is temporarily stored in the second temporary storing drawstring, pairing the battery cell stored on the second conveying drawstring with the battery cell temporarily stored on the second temporary storing drawstring, and controlling the second conveying drawstring and the second temporary storing drawstring to move from the carrying position to the output position.

By means of above way, the pairing efficiency can be improved in the discharging process, and the risk that discharging is delayed because the qualified battery cell is not stored in any one of the first conveying drawstring and the second conveying drawstring is reduced.

One embodiment of the present application further provides a battery cell which is obtained by assembling by the above end cover welding apparatus or the above assembling method; the battery cell includes the case 101, and the end cover 102 which is arranged at one end of the case 101; the joint of the case 101 and the end cover 102 is provided with the first connecting seam and the second connecting seam which are arranged along the peripheral direction of the case 101; and the case 101 and the end cover 102 are welded and fixed by the first connecting seam and the second connecting seam.

In some embodiments, the case 101 includes two first side walls which are arranged oppositely, and two second side walls which are arranged oppositely; the two first side walls and the two second side walls are arranged in a staggered mode in the circumferential direction of the case 101; the first connecting seam is located between the two first side walls in the circumferential direction of the case 101; and the second connecting seam is located between the two second side walls in the circumferential direction of the case 101.

According to one or more embodiments of the present application, an end cover welding apparatus 30 for the battery cell 100 includes a material conveying assembly 310, a feeding assembly 320, a press-fitting assembly 330, a welding assembly 340, a rolling assembly 350, a welding slag cleaning assembly 360, a post-welding detection assembly 370, a discharging assembly and a steering assembly 390.

The material conveying assembly 310 includes a conveying line 311, a first clamp 312 and a second clamp 313; the first clamp 312 and the second clamp 313 are arranged at an interval on the same conveying line 311; the first clamp 312 is configured to fix the case 101 and expose the first connecting seam; the second clamp 313 is configured to fix the case 101 and expose the second connecting seam; and the welding assembly 340 is arranged along the conveying line 311 and is configured to weld the first connecting seam when the first clamp 312 with the battery cell 100 fixed is conveyed to the welding assembly 340, and is also configured to weld the second connecting seam when the second clamp 313 with the battery cell 100 fixed is conveyed to the welding assembly 340.

The conveying line 311 includes a first conveying branch line 3111, a second conveying branch line 3112, a first transferring mechanism 3113 and a second transferring mechanism 3114; the first conveying branch line 3111 and the second conveying branch line 3112 are arranged side by side, and are opposite in conveying direction; the first transferring mechanism is arranged at one end of the first conveying branch line 3111 and one end of the second conveying branch line 3112 and is configured to transfer the first clamp 312 and the second clamp 313 from the first conveying branch line 3111 to the second conveying branch line 3112; the second transferring mechanism 3114 is arranged at the other end of the first conveying branch line 3111 and the other end of the second conveying branch line 3112 and is configured to transfer the first clamp 312 and the second clamp 313 from the second conveying branch line 3112 to the first conveying branch line 3111; and the welding assembly 340 is arranged along the first conveying branch line 3111, and the steering assembly 390 is arranged along the second conveying branch line 3112.

The first clamp 312 includes a first base 3124, a first bearing mechanism 3121, a first holding member 3122 and two first side fasteners 3123; the first bearing mechanism 3121 is configured to bear the battery cell 100, and the first holding member 3122 is arranged on the first bearing mechanism 3121 and configured to position the battery cell 100 borne on the first bearing mechanism 3121; the two first side fasteners 3123 are oppositely arranged and are configured to pre-limit the battery cell 100 which is borne on the first bearing mechanism 3121 and arranged between the two first side fasteners 3123; and the first bearing mechanism 3121 is arranged on the first base 3124 in a sliding mode, and the sliding direction of the first bearing mechanism 3121 is perpendicular to the conveying direction of the conveying line 311.

The second clamp 313 includes a second base 3134, a second bearing mechanism 3131, a second holding member 3132 and two second side fasteners 3133; the second bearing mechanism 3131 is configured to bear the battery cell 100, and the second holding member 3132 is arranged on the second bearing mechanism 3131 and configured to position the battery cell 100 borne on the second bearing mechanism 3131; the two second side fasteners 3133 are oppositely arranged and are configured to pre-limit the battery cell 100 which is borne on the second bearing mechanism 3131 and arranged between two first side fasteners 3123; the second bearing mechanism 3131 is arranged on the second base 3134 in a sliding mode, and the sliding direction of the second bearing mechanism 3131 is perpendicular to the conveying direction of a conveying line 311.

The welding assembly 340 includes a first welding mechanism 341 and a second welding mechanism 342 which are arranged at intervals along the conveying line 311; and the first welding mechanism 341 is configured to pre-weld the first connecting seam or the second connecting seam, and the second welding mechanism 342 is configured to further weld the first connecting seam or the second connecting seam after pre-welding. The first welding mechanism 341 includes two pre-welding mechanisms which are oppositely arranged on the two sides of the conveying line 311; the second welding mechanism 342 includes two full-welding mechanisms 3421 which are oppositely arranged on the two sides of the conveying line 311; the two pre-welding mechanisms are configured to perform pre-welding on the first connecting seam or the second connecting seam in related direction; and the two full-welding mechanisms 3421 are configured to perform full-welding on the first connecting seam or the second connecting seam in related direction respectively. The second welding mechanism 342 is configured to perform first welding on the pre-welded first connecting seam or the pre-welded second connecting seam in the first direction and perform second welding on the first connecting seam or the second connecting seam subjected to first-time welding in the second direction, and the first direction and the second direction are opposite.

The welding assembly 340 includes at least one full welding mechanism 3421 which is configured to carry out full welding on the first connecting seam or the second connecting seam.

The steering assembly 390 which is spaced from the welding assembly 340 along the conveying line 311; the conveying line 311 is configured to convey the first clamp 312 and the second clamp 313 to the steering assembly 390 from the welding assembly 340, and then convey to the welding assembly 340; the steering assembly 390 is configured to take out the battery cell 100 with the first connecting seam welded from the corresponding first clamp 312 and steer the battery cell, and then place the battery cell on the second clamp 313; or, the steering assembly 390 is configured to take out the battery cell 100 welded with the second connecting seam from the corresponding second clamp 313 and steer the battery cell, and then place the battery cell on the first clamp 312. The steering assembly 390 includes a supporting frame 391, a clamping jaw mechanism 392, a steering motor 393, a lifting frame 394 and a lifting motor 395; the supporting frame 391 is arranged on the outer side of the conveying line 311, and the clamping jaw mechanism 392 is located above the conveying line 311 and is rotatably supported on the supporting frame 391; the steering motor 393 is in transmission connection with the clamping jaw mechanism 392 and is configured to drive the clamping jaw mechanism 392 to rotate relative to the supporting frame 391 so as to steer; the clamping jaw mechanism 392 is configured to clamp the battery cell 100 and steer the battery cell 100; the lifting frame 394 is supported on the supporting frame 391 in a lifting mode, and the clamping jaw mechanism is rotationally arranged on the lifting frame 394; and the lifting motor 395 is arranged on the supporting frame 391 or the lifting frame 394, is in transmission connection with the lifting frame 394 and is configured to drive the lifting frame 394 to lift up and down relative to the supporting frame 391.

The rolling assembly 350 is spaced from the welding assembly 340 and is configured to roll the battery cell 100 welded by the welding assembly 340 so as to roll the welding flux on the first connecting seam or the second connecting seam. The rolling assembly 350 includes two rolling mechanisms 351 which are oppositely arranged on the two sides of the conveying line 311; and the two rolling mechanisms 351 are used for abutting against the battery cell 100 from the two sides of the conveying line 311 so as to roll the first connecting seam or the second connecting seam and the flanging, exceeding the case 101, of the end cover 102. Each rolling mechanism 351 includes a support 3511 and two rollers 3512; the support 3511 is arranged on the outer side of a conveying line 311; the two rollers 3512 are arranged at an interval on the support 3511 along the extending direction of the conveying line 311, so that the battery cell 100 can pass through the two rollers 3512 sequentially; and the two rollers 3512 are rotatably arranged on the support 3511 so as to roll the battery cell 100.

A welding slag cleaning component 360 is spaced from the welding assembly 340 along the conveying line 311 and is configured to clean the welding slag on the battery cell 100 welded by the welding assembly 340, so that the welding slag is separated from the battery cell 100.

The post-welding detection assembly 370 is arranged between the welding assembly 340 and the transferring mechanism 381 along the conveying line, and is configured to detect whether the welded battery cell 100 is qualified or not.

The press-fitting assembly 330 is spaced from the welding assembly 340 along the conveying line 311, and is configured to press-fit the case 101 and the end cover 102 before the battery cell 100 is conveyed to the welding assembly 340; and the welding assembly 340 is configured to weld the battery cell 100 after press-fitting.

The feeding assembly 320 is spaced from the conveying line 311, and is configured to place the battery cell 100 to be fed and welded on the first clamp 312 or the second clamp 313. The feeding assembly 320 includes a material storage mechanism 321 and a feeding mechanism 322, and the material storage mechanism 321 is configured to store the battery cell 100 to be fed and welded; and the feeding mechanism 322 is arranged along the conveying line 311, and is configured to take out the corresponding battery cell 100 from the material storage mechanism 321 and place the battery cell 100 on the first clamp 312 or the second clamp 313. The material storage mechanism 321 is configured to store the battery cell 100 in a preset placement posture relative to the conveying line 311; the feeding mechanism 322 is configured to take out the battery cell 100 in the preset placement posture from the material storage mechanism 321 and convey the battery cell 100 to the first clamp 312 in the preset placement posture; and the preset placement posture is consistent with a fixed posture required by the first clamp 312.

The discharging assembly is spaced from the conveying line 311 and is configured to take out the welded battery cell 100 from the conveying line 311 and convey the battery cell outwards. The discharging assembly includes a transferring mechanism 381 and a conveying mechanism 382; the transferring mechanism 381 is arranged along the conveying line 311 and is configured to transfer the welded battery cell 100 from the conveying line to the conveying mechanism 382; and the conveying mechanism 382 is configured to convey the corresponding battery cell 100 outwards. The conveying mechanism 382 includes the first conveying sub-mechanism 383 and the second conveying sub-mechanism 384; the transferring mechanism 381 is configured to transfer the battery cell 100 which is welded and passes detection from the conveying line 311 to the first conveying sub-mechanism 383, and move the battery cell 100 which is welded and does not pass the detection from the conveying line 311 to the second conveying sub-mechanism 384; and the first conveying sub-mechanism 383 and the second conveying sub-mechanism 384 are configured to convey relatively carried battery cells 100 outwards respectively. The first conveying sub-mechanism 383 includes the first drawstring mechanism 3830 and the second drawstring mechanism 3835 which can move relative to the transferring mechanism 381 and can move between a carrying position and an output position, and the first drawstring mechanism 3830 and the second drawstring mechanism 3835 are configured to move to the output position or be far away from the output position; the first drawstring mechanism 3830 and the second drawstring mechanism 3835 at the output position are configured to store the battery cells 100 moved by the transferring mechanism 381; and the first drawstring mechanism 3830 and/or the second drawstring mechanism 3835 are/is configured to store the battery cells 100 and move to the output position to output the corresponding pair of battery cells 100 after the pair of battery cells 100 are successfully paired. The first drawstring mechanism 3830 includes the first conveying drawstring 3831 and thee first temporary storing drawstring 3832; the second drawstring mechanism 3835 includes the second conveying drawstring 3836 and the second temporary storing drawstring 3837; the first conveying drawstring 3831 and the first temporary storing drawstring 3832 are arranged side by side, and the second conveying drawstring 3836 and the second temporary storing drawstring 3837 are arranged side by side; the first conveying drawstring 3831 and the second conveying drawstring 3836 are arranged side by side at an interval and are located on two sides of the output position; the first conveying drawstring 3831 and the first temporary storing drawstring 3832 can move towards the output position together or be far away from the output position; the second conveying drawstring 3836 and the second temporary storing drawstring 3837 can move towards the output position together or be far away from the output position; the first temporary storing drawstring 3832 and the second temporary storing drawstring 3837 are configured to temporarily store another battery cell 100 to be paired when one battery cell 100 to be paired is transferred to the second drawstring mechanism 3835; the first conveying drawstring 3831 and the second conveying drawstring 3836 are configured to store the battery cells 100 to be paired; when the battery cell 100 is temporarily stored on the first temporary storing drawstring 3832, the battery cell 100 stored on the first conveying drawstring 3831 is paired with the battery cell 100 temporarily stored on the first temporary storing drawstring 3832; when the battery cell 100 is temporarily stored on the second temporary storing drawstring 3837, the battery cell 100 stored on the second conveying drawstring 3836 is paired with the battery cell 100 temporarily stored on the second temporary storing drawstring 3837; and when the battery cell 100 is not temporarily stored on the first temporary storing drawstring 3832 and the battery cell 100 is not temporarily stored on the second temporary storing drawstring 3837, the battery cell 100 stored on the first conveying drawstring 3831 is paired with the battery cell 100 stored on the second conveying drawstring 3836.

According to one or more embodiments of the present application, the assembling method for the battery cell includes: step S100: feeding the battery cell to the first clamp or the second clamp on the same conveying line, the first clamp being configured to fix the case 101 and expose the first connecting seam, and the second clamp being configured to fix the case and expose the second connecting seam; step S200: controlling the conveying line to convey the first clamp and the second clamp to the welding assembly; step S250: controlling the welding assembly to weld the first connecting seam of the battery cell fixed on the first clamp, or to weld the second connecting seam of the battery cell fixed on the second clamp; step S300: controlling the conveying line to convey the welded battery cell to a rolling assembly by the corresponding first clamp or second clamp; step 350: rolling the welded battery cell by virtue of the rolling assembly so as to roll a welding flux on the first connecting seam or the second connecting seam; step 400: controlling the conveying line to convey the welded battery cell to a welding slag cleaning assembly through the corresponding first clamp or second clamp; step 450: controlling the welding slag cleaning assembly to clean welding slag attached to the welded battery cell, so as to separate the welding slag from the battery cell; step S500: controlling the conveying line to convey the first clamp and the second clamp to the steering assembly; step S550: controlling the steering assembly to take out the battery cell with the first connecting seam welded from the first clamp and steer and place the battery cell on the second clamp, or to take out the battery cell welded with the second connecting seam from the second clamp and steer and place the battery cell on the first clamp; and step S600: controlling the conveying line to convey the second clamp and the first clamp to the welding assembly from the steering assembly.

Before step S200, the method includes: controlling a press-fitting assembly to press-fit the battery cell fed to the first clamp or the second clamp so as to press-fit the case and the end cover.

Step S250 includes: controlling the first welding mechanism to pre-weld the first connecting seam or the second connecting seam of the battery cell; and controlling the second welding mechanism to fully weld the pre-welded first connecting seam or the pre-welded second connecting seam. The controlling a first welding mechanism to pre-weld the first connecting seam or the second connecting seam of the battery cell includes: controlling two oppositely-arranged pre-welding mechanisms to pre-weld parts of the first connecting seam or second connecting seam in related direction from two sides of the battery cell; and controlling two oppositely-arranged full-welding mechanisms to synchronously fully weld the respective parts of the first connecting seam or second connecting seam in related direction from two sides of the pre-welded battery cell.

After step S250, the method includes: controlling the discharging assembly to take out the welded battery cell from the first clamp or the second clamp and discharge the welded battery cell.

Step S350 includes: rolling parts of the first connecting seam and second connecting seam in related directions from two sides of the battery cell by virtue of two oppositely-arranged rolling mechanisms; and rolling the flange, exceeding the case, of the end cover.

Before step S500, the method includes: controlling the discharging assembly to take out the battery cell with the first connecting seam welded and the second connecting seam from the corresponding first clamp or the corresponding second clamp for discharging; and controlling the conveying line to convey the battery cell only with the first connecting seam welded from the corresponding first clamp to the steering assembly, and/or conveying the battery cell only welded with the second connecting seam from the corresponding second clamp to the steering assembly. The controlling a discharging assembly to take out the welded battery cell from the first clamp or the second clamp and discharge the welded battery cell includes: controlling the transferring mechanism to transfer the welded battery cell from the conveying line to the conveying mechanism, and controlling the conveying mechanism to convey the corresponding battery cell outwards. The controlling a transferring mechanism to transfer the welded battery cell from the conveying line to the conveying mechanism, and controlling the conveying mechanism to convey the corresponding battery cell outwards includes: controlling the transferring mechanism to transfer the battery cell which is welded and passes the detection from the conveying line to the first conveying sub-mechanism; controlling the transferring mechanism to transfer the battery cell which is welded and does not pass the detection from the conveying line to the second conveying sub-mechanism; and controlling the first conveying sub-mechanism to convey the borne battery cells outwards, and controlling the second conveying sub-mechanism to convey the borne battery cells outwards. The controlling the first conveying sub-mechanism to convey the borne battery cells outwards includes: after a pair of battery cells is stored in the first drawstring mechanism and/or the second drawstring mechanism and is successfully paired, controlling the first drawstring mechanism and/or the second drawstring mechanism to move from the carrying position to the output position, and outwards outputting the corresponding pair of battery cells. The after a pair of battery cells is stored in the first drawstring mechanism and/or the second drawstring mechanism and is successfully paired, controlling the first drawstring mechanism and/or the second drawstring mechanism to move from a carrying position to an output position, and outwards outputting the corresponding pair of battery cells includes: when the pair of battery cells to be paired is carried to the first conveying drawstring and the second conveying drawstring by the transferring mechanism, controlling the second conveying drawstring and the second conveying drawstring to move from the carrying position to the output position at the same time; when one battery cell to be paired is carried to the second drawstring mechanism by the transferring mechanism, temporarily storing the other battery cell to be paired by a first temporary storing drawstring or the second temporary storing drawstring; when the battery cell is temporarily stored in the first temporary storing drawstring, pairing the battery cell stored on the first conveying drawstring with the battery cell temporarily stored on the first temporary storing drawstring, and controlling the first conveying drawstring and the first temporary storing drawstring to move from the carrying position to the output position; and when the battery cell is temporarily stored in the second temporary storing drawstring, pairing the battery cell stored on the second conveying drawstring with the battery cell temporarily stored on the second temporary storing drawstring, and controlling the second conveying drawstring and the second temporary storing drawstring to move from the carrying position to the output position.

**In** a specific embodiment, the assembly method can be to weld the first connecting seam and then weld the second welding seam.

Specifically, the assembly method can include: feeding the battery cell to the first clamp on the conveying line so as to make the first connecting seam of the battery cell visible; controlling the press-fitting assembly to press-fit the battery cell fed to the first clamp so as to press-fit the case and the end cover, and switching the first holding member of the first clamp from the releasing status to the holding status after press-fitting; controlling the conveying line to convey the first clamp to the welding assembly; controlling the welding assembly to weld the first connecting seam of the battery cell fixed on the first clamp; controlling the conveying line to convey the battery cell with the first connecting seam welded to the rolling assembly through corresponding first clamp; rolling the battery cell with the first connecting seam welded by the rolling assembly, so as to roll the welding flux on the first connecting seam; controlling the conveying line to convey the battery cell with the first connecting seam welded to the welding slag cleaning assembly by the corresponding first clamp; controlling the welding slag cleaning assembly to clean welding slag attached to the welded battery cell so as to separate the welding slag from the battery cell; detecting whether the first connecting seam is qualified or not by the post-welding detection assembly; controlling the conveying line to convey the first clamp and the second clamp to the steering assembly; controlling the first holding member of the first clamp to be switched from the holding status to the releasing status, and controlling the steering assembly to take out the battery cell with the first connecting seam welded from the first clamp, steering and placing the battery cell on the second clamp, so as to make the second connecting seam of the battery cell visible; positioning the battery cell placed on the second clamp by the positioning assembly, and switching the second holding member of the second clamp from the releasing status to the holding status after positioning; controlling the conveying line to convey the second clamp to the welding assembly; controlling the welding assembly to weld the second connecting seam of the battery cell fixed on the second clamp; controlling the conveying line to convey the battery cell with the second connecting seam welded to the rolling assembly on the corresponding second clamp; rolling the battery cell with the second connecting seam welded by the rolling assembly so as to roll the welding flux on the second connecting seam; controlling the conveying line to convey the battery cell with the second connecting seam welded to the welding slag cleaning assembly on the corresponding second clamp; controlling the welding slag cleaning assembly to clean welding slag attached to the welded battery cell so as to separate the welding slag from the battery cell; detecting whether the second connecting seam is qualified or not by the post-welding detection assembly; controlling the discharging assembly to take out the battery cell with the first connecting seam and the second connecting seam welded from the corresponding second clamp; and placing the qualified battery cell on the first conveying sub-mechanism for pairing and discharging, and placing the unqualified battery cell on the second conveying sub-mechanism for discharging.

Finally, it is to be noted that the above embodiments are only used for illustrating the technical solutions of the present application, not to limit them, and although the present application is described in detail with reference to the foregoing embodiments, those of ordinary skill in the art should understand that it may still modify the technical solutions described in the foregoing embodiments, or replace some or all of the technical features therein, and these modifications or substitutions do not make the essence of the corresponding technical solutions out of the scope of the technical solutions of the embodiments of the present application, and they should be covered by the scope of the claims and description of the present application. In particular, the technical features mentioned in the various embodiments can be combined in any manner as long as there is no structural conflict. The present application is not limited to the specific embodiments disclosed herein, but includes all technical solutions that fall within the scope of the claims.

## Claims

1. An end cover welding apparatus, a battery cell comprising a case and an end cover arranged at one end of the case, a joint of the case and the end cover being provided with a first connecting seam and a second connecting seam which are arranged along a circumferential direction of the case, the end cover welding apparatus comprising:
a material conveying assembly comprising a conveying line, a first clamp and a second clamp, and the first clamp and the second clamp being arranged at an interval on the same conveying line, wherein the first clamp is configured to fix the case and expose the first connecting seam, and the second clamp is configured to fix the case and expose the second connecting seam; and
a welding assembly which is arranged along the conveying line and is configured to weld the first connecting seam when the first clamp with the battery cell fixed is conveyed to the welding assembly, and is also configured to weld the second connecting seam when the second clamp with the battery cell fixed is conveyed to the welding assembly.

2. The end cover welding apparatus according to claim 1, wherein
the end cover welding apparatus comprises a steering assembly which is spaced from the welding assembly along the conveying line, the conveying line is configured to convey the first clamp and the second clamp to the steering assembly from the welding assembly, and then to convey to the welding assembly;
the steering assembly is configured to take out the battery cell with the first connecting seam welded from the corresponding first clamp and steer the battery cell, and then to place the battery cell on the second clamp; or, the steering assembly is configured to take out the battery cell with the second connecting seam welded from the corresponding second clamp and steer the battery cell, and then to place the battery cell on the first clamp.

3. The end cover welding apparatus according to claim 2, wherein
the steering assembly comprises a supporting frame, a clamping jaw mechanism and a steering motor; the supporting frame is arranged on the outer side of the conveying line, and the clamping jaw mechanism is positioned above the conveying line and is rotatably supported on the supporting frame; the steering motor is in transmission connection with the clamping jaw mechanism and is configured to drive the clamping jaw mechanism to rotate relative to the supporting frame so as to steer; and the clamping jaw mechanism is configured to clamp the battery cell and steer the battery cell.

4. The end cover welding apparatus according to claim 3, wherein
the steering assembly comprises a lifting frame and a lifting motor; the lifting frame is supported on the supporting frame in a lifting mode, and the clamping jaw mechanism is rotatably arranged on the lifting frame; and the lifting motor is arranged on the supporting frame or the lifting frame, is in transmission connection with the lifting frame and is configured to drive the lifting frame to lift up and down relative to the supporting frame.

5. The end cover welding apparatus according to claim 2, wherein
the conveying line comprises a first conveying branch line, a second conveying branch line, a first transferring mechanism and a second transferring mechanism; the first conveying branch line and the second conveying branch line are arranged side by side, and are opposite in conveying directions; the first transferring mechanism is arranged at one end of the first conveying branch line and one end of the second conveying branch line and is configured to transfer the first clamp and the second clamp from the first conveying branch line to the second conveying branch line; the second transferring mechanism is arranged at the other end of the first conveying branch line and the other end of the second conveying branch line and is configured to transfer the first clamp and the second clamp from the second conveying branch line to the first conveying branch line; and the welding assembly is arranged along the first conveying branch line, and the steering assembly is arranged along the second conveying branch line.

6. The end cover welding apparatus according to claim 1, wherein
the welding assembly comprises a first welding mechanism and a second welding mechanism which are arranged at an interval along the conveying line; and the first welding mechanism is configured to pre-weld the first connecting seam or the second connecting seam, and the second welding mechanism is configured to further weld the first connecting seam or the second connecting seam after pre-welding.

7. The end cover welding apparatus according to claim 6, wherein
the first welding mechanism comprises two pre-welding mechanisms which are oppositely arranged on two sides of the conveying line; the second welding mechanism comprises two full-welding mechanisms which are oppositely arranged on the two sides of the conveying line; the two pre-welding mechanisms are configured to pre-weld parts of the first connecting seams or the second connecting seams in related directions; and the two full-welding mechanisms are configured to carry out full welding on parts of the first connecting seams or the second connecting seams in related directions.

8. The end cover welding apparatus according to claim 7, wherein
the second welding mechanism is configured to carry out first welding on the first connecting seam or the second connecting seam after pre-welding in a first direction, and carry out second welding on the first connecting seam or the second connecting seam after first welding in a second direction, and the first direction is opposite to the second direction.

9. The end cover welding apparatus according to claim 1, wherein
the welding assembly comprises at least one full-welding mechanism which is configured to carry out full welding on the first connecting seam or the second connecting seam.

10. The end cover welding apparatus according to claim 1, wherein
the end cover welding apparatus comprises a rolling assembly which is spaced from the welding assembly and is configured to roll the battery cell welded by the welding assembly so as to roll welding flux on the first connecting seam or the second connecting seam.

11. The end cover welding apparatus according to claim 10, wherein
the rolling assembly comprises two rolling mechanisms which are oppositely arranged on the two sides of the conveying line; and the two rolling mechanisms are configured to abut against the battery cell from the two sides of the conveying line so as to roll the first connecting seam or the second connecting seam, and a flange, exceeding the case, of the end cover.

12. The end cover welding apparatus according to claim 11, wherein
each rolling mechanism comprises a support and two rollers; the support is arranged on the outer side of the conveying line, and the two rollers are arranged at an interval on the support in an extending direction of the conveying line, then the battery cell can pass through the two rollers in sequence; and the two rollers are rotatably arranged on the support so as to roll the battery cell.

13. The end cover welding apparatus according to claim 1, wherein
the end cover welding apparatus comprises a welding slag cleaning assembly which is spaced from the welding assembly along the conveying line and is configured to clean welding slag on the battery cell welded by the welding assembly, so as to separate the welding slag from the battery cell.

14. The end cover welding apparatus according to claim 1, wherein
the end cover welding apparatus comprises a press-fitting assembly which is spaced from the welding assembly along the conveying line and is configured to perform press-fitting on the case and the end cover before the battery cell is conveyed to the welding assembly; and the welding assembly is configured to weld the battery cell after press-fitting.

15. The end cover welding apparatus according to claim 1, wherein
the end cover welding apparatus comprises a feeding assembly which is spaced from the conveying line and is configured to place the battery cell to be fed and welded on the first clamp or the second clamp.

16. The end cover welding apparatus according to claim 15, wherein
the feeding assembly comprises a material storage mechanism and a feeding mechanism, and the material storage mechanism is configured to store the battery cell to be fed and welded; and the feeding mechanism is arranged along the conveying line, and is configured to take out the corresponding battery cell from the material storage mechanism and to place the battery cell on the first clamp or the second clamp.

17. The end cover welding apparatus according to claim 16, wherein
the material storage mechanism is configured to store the battery cell in a preset placement posture relative to the conveying line; the feeding mechanism is configured to take out the battery cell in the preset placement posture from the material storage mechanism and convey the battery cell to the first clamp in the preset placement posture; and the preset placement posture is consistent with a fixed posture required by the first clamp.

18. The end cover welding apparatus according to claim 1, wherein
the end cover welding apparatus comprises a discharging assembly which is spaced from the conveying line and is configured to take out the welded battery cell from the conveying line and convey the battery cell outwards.

19. The end cover welding apparatus according to claim 18, wherein
the discharging assembly comprises a transferring mechanism and a conveying mechanism; the transferring mechanism is arranged along the conveying line and is configured to transfer the welded battery cell from the conveying line to the conveying mechanism; and the conveying mechanism is configured to convey the corresponding battery cell outwards.

20. The end cover welding apparatus according to claim 19, wherein
the conveying mechanism comprises a first conveying sub-mechanism and a second conveying sub-mechanism; the transferring mechanism is configured to transfer the battery cell which is welded and passes detection from the conveying line to the first conveying sub-mechanism, and to transfer the battery cell which is welded and does not pass detection from the conveying line to the second conveying sub-mechanism; and the first conveying sub-mechanism and the second conveying sub-mechanism are configured to convey relatively borne battery cells outwards respectively.

21. The end cover welding apparatus according to claim 20, wherein
the first conveying sub-mechanism comprises a first drawstring mechanism and a second drawstring mechanism which can move relative to the transferring mechanism and can move between a carrying position and an output position, and the first drawstring mechanism and the second drawstring mechanism are configured to move to the output position or be far away from the output position; the first drawstring mechanism and the second drawstring mechanism are configured to store the battery cells transferred by the transferring mechanism when in the output position; and the first drawstring mechanism and/or the second drawstring mechanism are/is configured to store the battery cells and move to the output position to output the corresponding pair of battery cells after the pair of battery cells is successfully paired.

22. The end cover welding apparatus according to claim 21, wherein
the first drawstring mechanism comprises a first conveying drawstring and a first temporary storing drawstring; the second drawstring mechanism comprises a second conveying drawstring and a second temporary storing drawstring; the first conveying drawstring and the first temporary storing drawstring are arranged side by side, and the second conveying drawstring and the second temporary storing drawstring are arranged side by side; the first conveying drawstring and the second conveying drawstring are arranged side by side at an interval and are located on two sides of the output position; the first conveying drawstring and the first temporary storing drawstring can move towards the output position together or be far away from the output position; the second conveying drawstring and the second temporary storing drawstring can move towards the output position together or be far away from the output position;
the first temporary storing drawstring and the second temporary storing drawstring are configured to temporarily store another battery cell to be paired when one battery cell to be paired is transferred to the second drawstring mechanism; the first conveying drawstring and the second conveying drawstring are configured to store the battery cells to be paired; when the battery cell is temporarily stored on the first temporary storing drawstring, the battery cell stored on the first conveying drawstring is paired with the battery cell temporarily stored on the first temporary storing drawstring; when the battery cell is temporarily stored on the second temporary storing drawstring, the battery cell stored on the second conveying drawstring is paired with the battery cell temporarily stored on the second temporary storing drawstring; and when the battery cell is not temporarily stored on the first temporary storing drawstring and the battery cell is not temporarily stored on the second temporary storing drawstring, the battery cell stored on the first conveying drawstring is paired with the battery cell stored on the second conveying drawstring.

23. The end cover welding apparatus according to claim 19, wherein
the end cover welding apparatus comprises a post-welding detection assembly which is arranged between the welding assembly and the transferring mechanism along the conveying line and is configured to detect whether the welded battery cell is qualified or not.

24. The end cover welding apparatus according to claim 1, wherein
the first clamp comprises a first bearing mechanism and a first holding member; the first bearing mechanism is configured to bear the battery cell, and the first holding member is arranged on the first bearing mechanism and is configured to position the battery cell borne on the first bearing mechanism;
the second clamp comprises a second bearing mechanism and a second holding member; and the second bearing mechanism is configured to bear the battery cell, and the second holding member is arranged on the second bearing mechanism and is configured to position the battery cell borne on the second bearing mechanism.

25. The end cover welding apparatus according to claim 24, wherein
the first clamp further comprises two first side fasteners; the two first side fasteners are oppositely arranged and are configured to pre-limit the battery cell which is borne on the first bearing mechanism and is arranged between the two first side fasteners;
the second clamp further comprises two second side fasteners; and the two second side fasteners are oppositely arranged and are configured to pre-limit the battery cell which is borne on the second bearing mechanism and is arranged between the two first side fasteners.

26. The end cover welding apparatus according to claim 24, wherein
the first clamp further comprises a first base; the first bearing mechanism is arranged on the first base in a sliding manner, and a sliding direction of the first bearing mechanism is perpendicular to a conveying direction of the conveying line;
the second clamp further comprises a second base; and the second bearing mechanism is arranged on the second base in a sliding manner, and the sliding direction of the second bearing mechanism is perpendicular to the conveying direction of the conveying line.

27. The end cover welding apparatus according to claim 1, wherein
the case comprises two first side walls which are arranged oppositely, and two second side walls which are arranged oppositely; the two first side walls and the two second side walls are arranged in a staggered mode in the circumferential direction of the case; the first connecting seam is located between the two first side walls in the circumferential direction of the case; and the second connecting seam is located between the two second side walls in the circumferential direction of the case.

28. A battery assembling system, a battery comprising a case, an end cover and an electrode assembly, wherein the case is provided with an open end, a terminal post is arranged on the wall, opposite to the open end, of the case, the terminal post is provided with a through hole, and the case and the end cover are connected to form an accommodating cavity communicating with the through hole; an active material coating portion of the electrode assembly is arranged in the case, and a tab portion of the electrode assembly penetrates through the through hole to be connected to the side, deviating from the accommodating cavity, of the terminal post;
the battery assembling system comprises a conveying device and an assembling device, and the conveying device is configured to convey to-be-assembled structures to each station of the assembling device; the stations of the assembling device at least comprise a tab welding apparatus, a case entering apparatus, a tab penetrating apparatus, a terminal post welding apparatus, and the end cover welding apparatus according to any one of claims 1 to 27;
the tab welding apparatus is configured to weld a plurality of tab sheets of the electrode assembly to form the tab portion; the case entering apparatus is configured to mount the electrode assembly into the case from the open end; the tab penetrating apparatus is configured to clamp the tab portion to penetrate through the through hole when the electrode assembly is mounted into the case; and the terminal post welding apparatus is configured to weld the tab portion penetrating through the through hole to the side, away from the accommodating cavity, of the terminal post.

29. An assembling method, a battery cell comprising a case and an end cover which is arranged at one end of the case, and a joint of the case and the end cover being provided with a first connecting seam and a second connecting seam which are arranged along the circumferential direction of the case, the assembling method comprising:
feeding the battery cell to a first clamp or a second clamp on the same conveying line, the first clamp being configured to fix the case and expose the first connecting seam, and the second clamp being configured to fix the case and expose the second connecting seam;
controlling the conveying line to convey the first clamp and the second clamp to a welding assembly; and
controlling the welding assembly to weld the first connecting seam of the battery cell fixed on the first clamp, or to weld the second connecting seam of the battery cell fixed on the second clamp.

30. The assembling method according to claim 29, wherein
after controlling the welding assembly to weld the first connecting seam of the battery cell fixed on the first clamp, or to weld the second connecting seam of the battery cell fixed on the second clamp, the method comprises:
controlling the conveying line to convey the first clamp and the second clamp to a steering assembly;
controlling the steering assembly to take out the battery cell with the first connecting seam welded from the first clamp and steer and place the battery cell on the second clamp, or to take out the battery cell with the second connecting seam welded from the second clamp and steer and place the battery cell on the first clamp; and
controlling the conveying line to convey the second clamp and the first clamp to the welding assembly from the steering assembly.

31. The assembling method according to claim 30, wherein
before controlling the conveying line to convey the first clamp and the second clamp to a steering assembly, the method comprises:
controlling a discharging assembly to take out the battery cell with the first connecting seam and the second connecting seam welded from the corresponding first clamp or the corresponding second clamp for discharging; and
controlling the conveying line to convey the battery cell only with the first connecting seam welded from the corresponding first clamp to the steering assembly, and/or to convey the battery cell with the second connecting seam welded only from the corresponding second clamp to the steering assembly.

32. The assembling method according to claim 29, wherein
the controlling the welding assembly to weld the first connecting seam of the battery cell fixed on the first clamp, or to weld the second connecting seam of the battery cell fixed on the second clamp comprises:
controlling a first welding mechanism to pre-weld the first connecting seam or the second connecting seam of the battery cell; and
controlling a second welding mechanism to perform full-welding on the first connecting seam or the second connecting seam after pre-welding.

33. The assembling method according to claim 32, wherein
the controlling a first welding mechanism to pre-weld the first connecting seam or the second connecting seam of the battery cell comprises:
controlling two oppositely-arranged pre-welding mechanisms to pre-weld parts of the first connecting seam or second connecting seam in related directions from two sides of the battery cell; and
controlling two oppositely-arranged full-welding mechanisms to synchronously perform full-welding on parts of the first connecting seam or second connecting seam in related directions from two sides of the pre-welded battery cell.

34. The assembling method according to claim 29, wherein
after controlling the welding assembly to weld the first connecting seam of the battery cell fixed on the first clamp, or to weld the second connecting seam of the battery cell fixed on the second clamp, the method comprises:
controlling the conveying line to convey the welded battery cell to a rolling assembly by the corresponding first clamp or second clamp; and
rolling the welded battery cell by virtue of the rolling assembly so as to roll a welding flux on the first connecting seam or the second connecting seam.

35. The assembling method according to claim 34, wherein
the rolling the welded battery cell by virtue of the rolling assembly so as to roll a welding flux on the first connecting seam or the second connecting seam comprises:
rolling parts of the first connecting seam and second connecting seam in related directions from two sides of the battery cell by virtue of two oppositely-arranged rolling mechanisms; and rolling a flange, exceeding the case, of the end cover.

36. The assembling method according to claim 29, wherein
after controlling the welding assembly to weld the first connecting seam of the battery cell fixed on the first clamp, or to weld the second connecting seam of the battery cell fixed on the second clamp, the method comprises:
controlling the conveying line to convey the welded battery cell to a welding slag cleaning assembly by the corresponding first clamp or second clamp; and
controlling the welding slag cleaning assembly to clean welding slag attached to the welded battery cell, so as to separate the welding slag from the battery cell.

37. The assembling method according to claim 29, wherein
the controlling the conveying line to convey the first clamp and the second clamp to a welding assembly comprises:
controlling a press-fitting assembly to press-fit the battery cell fed to the first clamp or the second clamp so as to press-fit the case and the end cover.

38. The assembling method according to claim 29, wherein
after controlling the welding assembly to weld the first connecting seam of the battery cell fixed on the first clamp, or to weld the second connecting seam of the battery cell fixed on the second clamp, the method comprises:
controlling a discharging assembly to take out the welded battery cell from the first clamp or the second clamp and discharge the welded battery cell.

39. The assembling method according to claim 38, wherein
the controlling a discharging assembly to take out the welded battery cell from the first clamp or the second clamp and discharge the welded battery cell comprises:
controlling a transferring mechanism to transfer the welded battery cell from the conveying line to the conveying mechanism, and controlling the conveying mechanism to convey the corresponding battery cell outwards.

40. The assembling method according to claim 39, wherein
the controlling a transferring mechanism to transfer the welded battery cell from the conveying line to the conveying mechanism, and controlling the conveying mechanism to convey the corresponding battery cell outwards comprises:
controlling the transferring mechanism to transfer the battery cell which is welded and passes detection from the conveying line to a first conveying sub-mechanism;
controlling the transferring mechanism to transfer the battery cell which is welded and does not pass detection from the conveying line to a second conveying sub-mechanism; and
controlling the first conveying sub-mechanism to convey the borne battery cell outwards, and controlling the second conveying sub-mechanism to convey the borne battery cell outwards.

41. The assembling method according to claim 40, wherein
the controlling the first conveying sub-mechanism to convey the borne battery cell outwards comprises:
after a pair of battery cells is stored in a first drawstring mechanism and/or a second drawstring mechanism and is successfully paired, controlling the first drawstring mechanism and/or the second drawstring mechanism to move from a carrying position to an output position, and outwards outputting the corresponding pair of battery cells.

42. The assembling method according to claim 41, wherein
the after a pair of battery cells is stored in a first drawstring mechanism and/or a second drawstring mechanism and is successfully paired, controlling the first drawstring mechanism and/or the second drawstring mechanism to move from a carrying position to an output position, and outwards outputting the corresponding pair of battery cells comprises:
when the pair of battery cells to be paired is transferred to the first conveying drawstring and the second conveying drawstring by the transferring mechanism, controlling the second conveying drawstring and the second conveying drawstring to move from the carrying position to the output position at the same time;
when one battery cell to be paired is transferred to the second drawstring mechanism by the transferring mechanism, temporarily storing the other battery cell to be paired by a first temporarily storing drawstring or a second temporarily storing drawstring;
when the battery cell is temporarily stored in the first temporarily storing drawstring, pairing the battery cell stored on the first conveying drawstring with the battery cell temporarily stored on the first temporarily storing drawstring, and controlling the first conveying drawstring and the first temporarily storing drawstring to move from the carrying position to the output position; and
when the battery cell is temporarily stored in the second temporarily storing drawstring, pairing the battery cell stored on the second conveying drawstring with the battery cell temporarily stored on the second temporarily storing drawstring, and controlling the second conveying drawstring and the second temporarily storing drawstring to move from the carrying position to the output position.

43. A battery cell, being obtained by assembling by the end cover welding apparatus according to any one of claims 1 to 27 or the battery assembling system according to claim 28, or the assembling method according to any one of claims 29 to 42, the battery cell comprising a case, and an end cover which is arranged at one end of the case, wherein a joint of the case and the end cover is provided with a first connecting seam and a second connecting seam which are arranged along a peripheral direction of the case; and the case and the end cover are welded and fixed by the first connecting seam and the second connecting seam.

44. The battery cell according to claim 43, wherein
the case comprises two first side walls which are arranged oppositely, and two second side walls which are arranged oppositely; the two first side walls and the two second side walls are arranged in a staggered mode in the circumferential direction of the case; the first connecting seam is located between the two first side walls in the circumferential direction of the case; and the second connecting seam is located between the two second side walls in the circumferential direction of the case.
